# EUROPEAN PATENT APPLICATION

(11) **EP 4 525 494 A1**
(43) Date of publication of application: **19.03.2025**
(21) Application number: 23820050.5
(22) Date of filing: 02.06.2023
(51) Int. Cl.: H04W 8/18, H04W 76/27, H04W 88/06

(54) **METHOD AND DEVICE FOR MANAGING GAP PRIORITY FOR MUSIM TERMINAL IN WIRELESS COMMUNICATION SYSTEM**

(30) Priority: 10.06.2022 KR 20220070784
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR); AGIWAL, Anil, Suwon-si Gyeonggi-do 16677 (KR)
(74) Representative: Gulde & Partner
(86) International application number: PCT/KR2023/007563
(87) International publication number: WO 2023/239114

(57) **Abstract**

The present disclosure relates to a 5G or 6G communication system for supporting higher data transmission rates. Specifically, the present disclosure relates to a method and device for managing the gap priority of a dual SIM terminal.

## Description

### [Technical Field]

The disclosure relates to a wireless communication system or a next-generation communication system. Specifically, the disclosure relates to a method and a device for managing gap priorities for a multi-SIM (multi-universal subscriber identify module (USIM) (MUSIM)) terminal in a wireless communication system or a next-generation communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, there is a need for ways to smoothly provide various services. With regard to this, in particular, there is a need for ways to smoothly operates MUSIM terminals.

### [Disclosure of Invention]

### [Technical Problem]

The disclosure is to provide a device and a method capable of effectively providing various services in a wireless communication system or a mobile communication system.

### [Solution to Problem]

A method performed by a UE supporting multiple universal subscriber identity modules (MUSIMs) according to an embodiment of the disclosure includes: transmitting, to a base station, a first message including a first indicator indicating that the UE may report priority for each MUSIM-related gap preference; and receiving, from the base station, a second message including a second indicator indicating the UE to report the priority.

A method performed by a base station according to another embodiment of the disclosure includes: receiving, from a UE supporting multiple universal subscriber identity modules (MUSIMs), a first message including a first indicator indicating that the UE may report priority for each MUSIM-related gap preference; and transmitting, to the UE, a second message including a second indicator indicating the UE to report the priority.

A UE supporting multiple universal subscriber identity modules (MUSIMs) according to another embodiment of the disclosure includes a transceiver, and a controller connected to the transceiver, wherein the controller is configured to: transmit, to a base station, a first message including a first indicator indicating that the UE may report priority for each MUSIM-related gap preference; and receive, from the base station, a second message including a second indicator indicating the UE to report the priority.

A base station according to another embodiment of the disclosure includes a transceiver, and a controller connected to the transceiver, wherein the controller is configured to: receive, from a UE supporting multiple universal subscriber identity modules (MUSIMs), a first message including a first indicator indicating that the UE may report priority for each MUSIM-related gap preference; and transmit, to the UE, a second message including a second indicator indicating the UE to report the priority.

### [Advantageous Effects of Invention]

According to proposed embodiments, various services supported in a wireless communication system (or mobile communication system) or a next-generation communication system can be effectively provided.

### [Brief Description of Drawings]

FIG. 1 illustrates a structure of a long term evolution (LTE) system according to an embodiment of the disclosure.
FIG. 2 illustrates a radio protocol structure in an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a diagram illustrating an operation in which a UE (multi-universal subscriber identity module (USIM) user equipment (UE), hereinafter, referred to as MUSIM UE (or MUSIM terminal)) supporting multiple USIMs performs, while maintaining a radio resource control (RRC) connected mode (i.e., RRC_CONNECTED) with a base station associated with one USIM, an operation associated with another USIM, according to an embodiment of the disclosure;
FIG. 6 is a diagram illustrating an operation in which a UE (i.e., MUSIM UE) supporting multiple USIMs performs, while maintaining an RRC connected mode (i.e., RRC_CONNECTED) with a base station associated with one USIM, an operation associated with another USIM, according to an embodiment of the disclosure;
FIG. 7 is a diagram illustrating an operation in which a UE (i.e., MUSIM UE) supporting multiple USIMs performs, while maintaining an RRC connected mode (i.e., RRC_CONNECTED) with a base station associated with one USIM, an operation associated with another USIM, according to an embodiment of the disclosure;
FIG. 8 is a flowchart illustrating inter-base station signaling (inter-node signaling) when a UE (i.e., MUSIM UE) supporting multiple USIMs operates in dual connectivity (DC), according to an embodiment of the disclosure;
FIG. 9 is a block diagram illustrating an internal structure of a UE according to an embodiment of the disclosure; and
FIG. 10 is a block diagram illustrating a configuration of a new radio (NR) base station according to an embodiment of the disclosure.

### [Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a field programmable gate array (FPGA) or an application specific integrated circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards.

In the following description, a base station (BS) is an entity that allocates resources to terminals, and may be at least one of a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB". A terminal may include a user equipment (UE), a mobile station (MS), a cellular phone, a smartphone, a computer, or a multimedia system capable of performing a communication function. Of course, the examples given above are not limiting.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (BS) (or eNB or gNB), and the downlink refers to a radio link via which the base station transmits data or control signals to the terminal. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

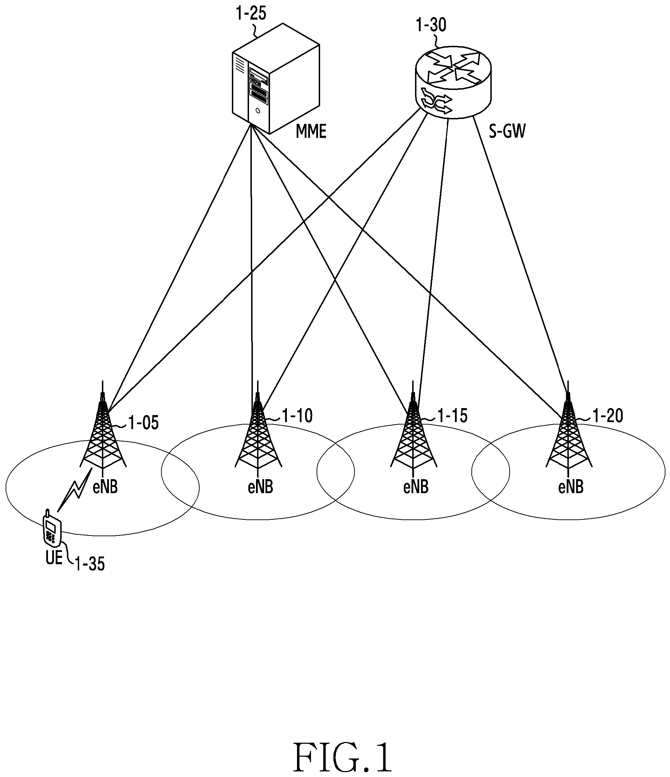

FIG. 1 illustrates a structure of an LTE system according to an embodiment of the disclosure.

Referring to FIG. 1, as illustrated therein, a radio access network of an LTE system includes next-generation base stations (evolved node Bs, hereinafter ENBs, node Bs, or base stations) 1-05, 1-10, 1-15, and 1-20, a mobility management entity (MME) 1-25, and a serving gateway (S-GW) 1-30. A user equipment (hereinafter UE or terminal) 1-35 accesses an external network through the ENBs 1-05 to 1-20 and the S-GW 1-30.

In FIG. 1, the ENBs 1-05 to 1-20 correspond to conventional node Bs of a universal mobile telecommunication system (UMTS). The ENBs are connected to the UE 1-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1-05 to 1-20 serve as the device. In general, one ENB controls multiple cells. For example, in order to implement a transfer rate of 100 Mbps, the LTE system may use orthogonal frequency division multiplexing (OFDM) as a radio access technology in a bandwidth of, for example, 20 MHz. Furthermore, the LTE system employs an adaptive modulation & coding (AMC) scheme for determining a modulation scheme and a channel coding rate according to a channel state of a UE. The S-GW 1-30 is a device that provides a data bearer, and generates or removes a data bearer under the control of the MME 1-25. The MME is a device responsible for various control functions as well as a mobility management function for a UE, and is connected to multiple base stations.

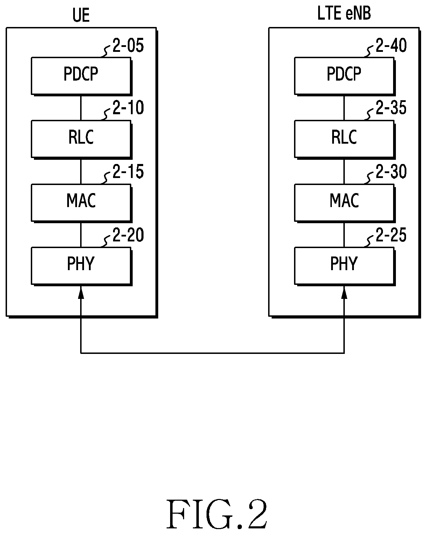

FIG. 2 illustrates a radio protocol structure of an LTE system according to an embodiment of the disclosure.

Referring to FIG. 2, a radio protocol of an LTE system includes a packet data convergence protocol (PDCP) 2-05 or 2-40, a radio link control (RLC) 2-10 or 2-35, and a medium access control (MAC) 2-15 or 2-30 on each of UE and ENB sides. The packet data convergence protocol (PDCP) 2-05 or 2-40 is responsible for operations such as IP header compression/reconstruction. The main functions of the PDCP are summarized as follows.
- Header compression and decompression: robust header compression (ROHC) only
- Transfer of user data
- In-sequence delivery of upper layer protocol data units (PDUs) at PDCP re-establishment procedure for RLC acknowledged mode (AM)
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) 2-10 or 2-35 reconfigures a PDCP protocol data unit (PDU) into an appropriate size to perform an ARQ operation. etc. The main functions of the RLC are summarized as follows.
- Transfer of upper layer PDUs
- Error Correction through ARQ (only for AM data transfer)

Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 is connected to several RLC layer devices configured in a single terminal, and multiplexes RLC PDUs into a MAC PDU and demultiplexes a MAC PDU into RLC PDUs. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Hybrid automatic repeat request (HARQ) (Error correction through HARQ)
- Priority handling between logical channels of one UE
- Priority handling between UEs by means of dynamic scheduling
- Multimedia broadcast and multicast service (MBMS) service identification
- Transport format selection
- Padding

A physical layer 2-20 or 2-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

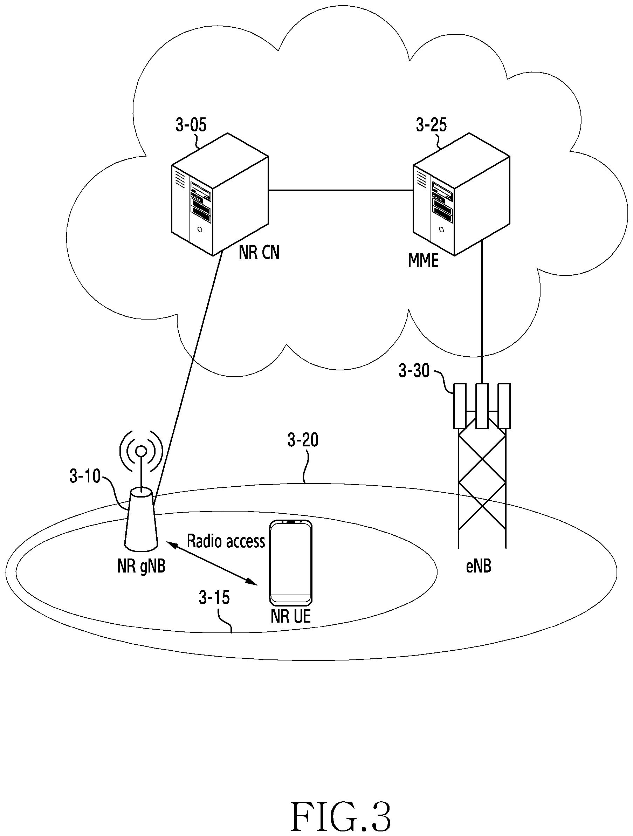

FIG. 3 illustrates a structure of a next-generation mobile communication system according to an embodiment of the disclosure.

Referring to FIG. 3, as illustrated therein, a radio access network of a next-generation mobile communication system (hereinafter NR or 6G) includes a next-generation base station (new radio node B, hereinafter NR gNB or NR base station) 3-10, and a new radio core network (NR CN) 3-05. A user terminal (new radio user equipment, hereinafter NR UE or NR terminal) 3-15 accesses an external network via the NR gNB 3-10 and the NR CN 3-05.

In FIG. 3, the NR gNB 3-10 corresponds to an evolved node B (eNB) of a conventional LTE system. The NR gNB may be connected to the NR UE 3-15 through a radio channel and provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly is required, and the NR gNB 3-10 serves as the device. In general, one NR gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (OFDM) as a radio access technology, and may additionally integrate a beamforming technology therewith. Furthermore, the next-generation mobile communication system employs an adaptive modulation & coding (AMC) scheme for determining a modulation scheme and a channel coding rate according to a channel state of the UE. The NR CN 3-05 performs functions such as mobility support, bearer configuration, and QoS configuration. The NR CN is a device responsible for various control functions as well as a mobility management function for a UE, and is connected to multiple base stations. In addition, the next-generation mobile communication system may interwork with the existing LTE system, and the NR CN is connected to an MME 3-25 via a network interface. The MME is connected to an eNB 3-30 that is an existing base station.

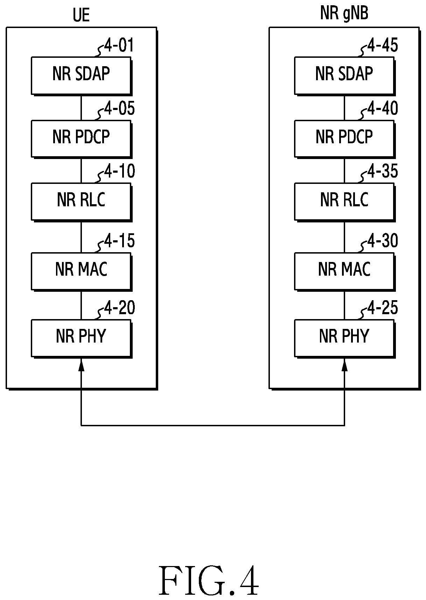

FIG. 4 illustrates a radio protocol structure of a next-generation mobile communication system according to an embodiment of the disclosure.

FIG. 4 illustrates a radio protocol structure of a next-generation mobile communication system to which the disclosure is applicable.

Referring to FIG. 4, a radio protocol of a next-generation mobile communication system includes an NR service data adaptation protocol (SDAP) 4-01 or 4-45, an NR PDCP 4-05 or 4-40, an NR RLC 4-10 or 4-35, and an NR MAC 4-15 or 4-30 on each of UE and NR base station sides.

The main functions of the NR SDAP 4-01 or 4-45 may include some of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SDAP PDUs
- With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 4-05 or 4-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 4-10 or 4-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of successively delivering RLC SDUs received from the lower layer to the upper layer, and may include a function of reassembling and delivering multiple RLC SDUs received, into which one original RLC SDU has been segmented, may include a function of reordering the received RLC PDUs with reference to the RLC SN or PDCP SN, may include a function of recording RLC PDUs lost as a result of reordering, may include a function of reporting the state of the lost RLC PDUs to the transmitting side, may include a function of requesting retransmission of the lost RLC PDUs, may include a function of, if there is a lost RLC SDU, successively delivering only RLC SDUs before the lost RLC SDU to the upper layer, may include a function of, if a predetermined timer has expired although there is a lost RLC SDU, successively delivering all RLC SDUs received before the timer was started to the upper layer, or may include a function of, if a predetermined timer has expired although there is a lost RLC SDU, successively delivering all currently received RLC SDUs to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 14-15 or 4-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

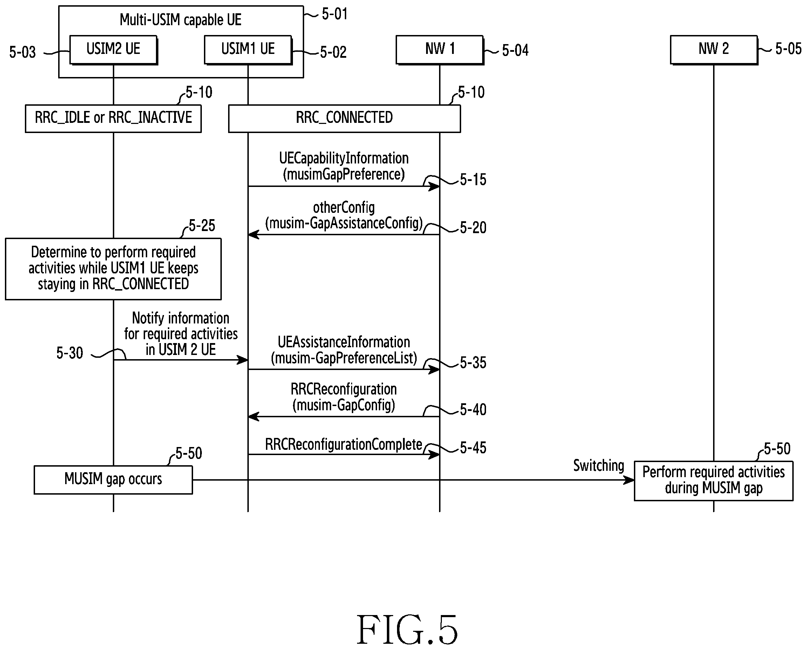

FIG. 5 is a diagram illustrating an operation in which a UE (MUSIM UE or MUSIM terminal) supporting multiple USIMs performs, while maintaining an RRC connected mode (RRC_CONNECTED) with a base station associated with one USIM, an operation associated with another USIM, according to an embodiment of the disclosure.

A MUSIM UE 5-01 according to an embodiment of the disclosure may refer to a UE supporting two or more USIMs. In the disclosure, for convenience of description, a dual-USIM UE supporting two USIMs is considered, but it is obvious that the following description of the dual-USIM UE is similarly applicable to a UE supporting three or more USIMs. The dual-USIM UE performs, at a given time, transmission to a base station associated with one USIM or transmission to base stations associated with respective USIMs. Similarly, the dual-USIM UE may perform, at a given time, reception from a base station associated with one USIM or reception from base stations associated with respective USIMs at the same time.

Referring to FIG. 5, the MUSIM UE 5-01 may refer to a UE supporting multiple USIMs in one device. For example, the MUSIM UE may refer to a USIM 1 UE 5-02 when operating in USIM 1, and may refer to a USIM 2 UE 5-03 when operating in USIM 2. Base stations associated with the respective USIMs may not recognize the MUSIM UE as a single UE, but recognize the MUSIM UE as one UE specific to each of the USIMs. For example, base station 1 (or a base station of network 1 (NW1)) 5-04 may recognize the USIM 1 UE 5-02 as one UE, and base station 2 (or a base station of network 2 (NW2)) 5-05 may recognize the USIM 2 UE 5-03 as one UE. Hereinafter, for convenience of description in the embodiments of the disclosure, when the MUSIM UE performs communication using USIM 1, the MUSIM UE is referred to as the USIM 1 UE, and when the MUSIM UE performs communication using USIM 2, the MUSIM UE is referred to as the USIM 2 UE. That is, the MUSIM UE may be either the USIM 1 UE or the USIM 2 UE depending on which USIM among USIM 1 and USIM 2 is used.

In step 5-10, an RRC connection with base station 1 5-04 is established for the USIM 1 UE 5-02, so that the USIM 1 UE 5-02 may be in an RRC connected mode (i.e., RRC_CONNECTED). On the other hand, in step 5-10, an RRC connection with base station 2 5-05 is not established for the USIM 2 UE 5-03 so that the USIM 2 UE 5-03 may be in an RRC idle mode (i.e., RRC_IDLE) or an RRC inactive mode (i.e., RRC_INACTIVE).

In step 5-15, the USIM 1 UE 5-02 may transmit a UE capability information message (UECapabilityInformation) to base station 1 5-04. The UE capability information message may include the following information.
- Indicator (i.e., musimGapPrefenrece) indicating that the USIM 1 UE 5-02 may transmit, as MUSIM assistance information, a MUSIM gap preference and a related MUSIM gap configuration to base station 1 5-04.

In step 5-20, base station 1 5-04 may transmit a predetermined RRC message (e.g., an RRCReconfiguration message, an RRCResume message, or a new RRC message) including configuration information (i.e., musim-GapAssistanceConfig) indicating to report MUSIM gap information that the USIM 1 UE 5-02 prefers or requires for MUSIM operation. Additionally, the musim-GapAssistanceConfig may be contained in otherConfig. The musim-GapAssistanceConfig may include the following information.
* Musim-GapProhibitTimer value
** If base station 1 5-04 configures or sets up a new prohibit timer (e.g., Musim-GapProhibitTimer) value for the USIM 1 UE 5-02, when initiating a procedure for transmitting preferred MUSIM gap configuration information to base station 1 5-04, the USIM 1 UE 5-02 may operate a new timer with the new prohibit timer value and transmit a predetermined RRC message including the preferred MUSIM gap configuration information to base station 1 5-04. When the new timer is running, the USIM 1 UE 5-02 may not be able to transmit, to base station 1 5-04, the predetermined RRC message including the MUSIM gap configuration information preferred by the USIM 1 UE 5-02. That is, if the new timer is not running or expires, the USIM 1 UE 5-02 may transmit, to base station 1 5-04, the predetermined RRC message including the MUSIM gap configuration information preferred by the USIM 1 UE 5-02.

In step 5-25, the USIM 2 UE 5-03 may determine whether to perform a predetermined operation in the RRC idle mode or the RRC inactive mode. The predetermined operation is an operation of the USIM 2 UE 5-03, which is related to base station 2 5-05, and may refer to at least one of the followings.
* Operation 1: The USIM 2 UE 5-03 does not perform an RRC connection establishment procedure or an RRC connection resume procedure with base station 2 5-05, but may perform an operation of receiving a signal transmitted by base station 2 5-05 or an internal operation of the USIM 2 UE via reception. For example:
   ** The USIM 2 UE 5-03 may perform paging channel or short message monitoring associated with base station 2 5-05. For example, the USIM 2 UE 5-03 may monitor a paging occasion in each discontinuous reception (DRX) cycle.
   ** The USIM 2 UE 5-03 may perform monitoring to receive a system information change notification associated with base station 2 5-05. For example, the USIM 2 UE 5-03 may monitor a paging occasion in each DRX cycle.
   ** The USIM 2 UE 5-03 may perform a cell selection or cell reselection evaluation procedure. For example, the USIM 2 UE may perform serving cell or neighboring cell measurement as a part of the cell selection or cell reselection evaluation procedure.
   ** The USIM 2 UE 5-03 may perform a public land mobile network (PLMN) selection procedure.
* Operation 2: The USIM 2 UE 5-03 does not perform an RRC connection establishment procedure or an RRC connection resume procedure with base station 2 5-05, but may perform transmission and reception to or from base station 2 5-05. For example:
   ** The USIM 2 UE 5-03 may request on-demand system information for acquiring system information from base station 2 5-05 or in an on-demand scheme.
* Operation 3: The USIM 2 UE 5-03 in the RRC inactive mode may perform an RRC connection resume procedure with base station 2 5-05, but may not transition to the RRC connected mode. For example:
   ** Although the USIM 2 UE 5-03 receives a radio access network (RAN) paging message transmitted by base station 2 5-05, and the received RAN paging message includes a UE identifier (e.g., an inactive radio network temporary identifier (I-RNTI)) indicating the USIM 2 UE 5-03, the USIM 1 UE 5-02 may need to continuously transmit data to and receive data from base station 1 5-04. In this case, the USIM 2 UE 5-03 may transmit, to base station 2 5-05, an RRCResumeRequest/1 message containing a busy indication indicating incapability to respond to the RAN paging message received from base station 2 5-05. It is noted that the busy indication may be contained in resumeCause of the RRCResumeRequest/1 message. In response, base station 2 5-05 may transmit an RRCReject or RRCRelease message to the USIM 2 UE 5-03.
* Operation 4: The USIM 2 UE 5-03 may perform an RRC connection establishment or resume procedure with base station 2 5-05 so as to transition to the RRC connected mode. For example:
   ** The USIM 2 UE 5-03 may perform a registration update procedure or a RAN notification area update procedure.

The aforementioned operations according to the embodiments may be periodic operations, aperiodic operations, or one-time operations.

In step 5-30, the USIM 2 UE 5-03 in the RRC idle mode or the RRC inactive mode may notify the USIM 1 UE 5-02 of information required to perform the operations described in step 5-25. It is noted that whether to perform step 5-30 and a specific scheme of performing step 5-30 may vary according to an implementation example of the MUSIM UE 5-01.

In step 5-35, the USIM 1 UE 5-02 may transmit, to base station 1 5-04, a predetermined RRC message (e.g., a UEAssistanceInformation message or a new RRC message) containing configuration information (musim-GapPreferenceList) for one or multiple preferred MUSIM gap patterns. The musim-GapPreferenceList may include information having the ASN.1 structure of Table 1 and Table 2 below.

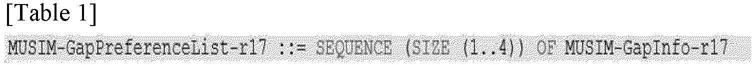

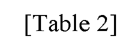

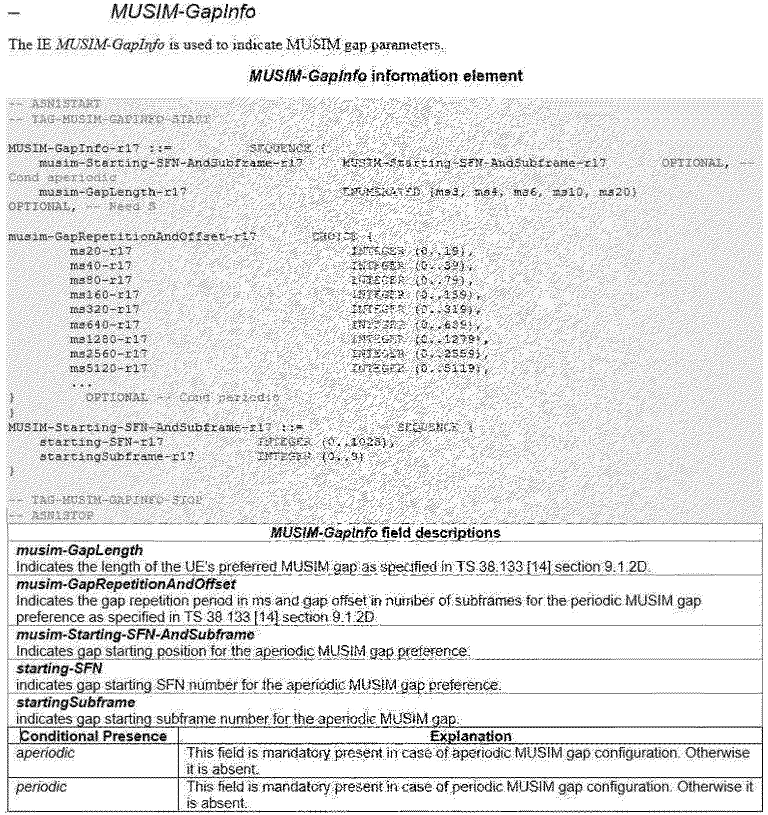

In step 5-35, the USIM 1 UE 5-02 may transmit, to base station 1 5-04, the predetermined RRC message containing musim-GapPreferenceList according to Table 3, Table 4, and Table 5 below.

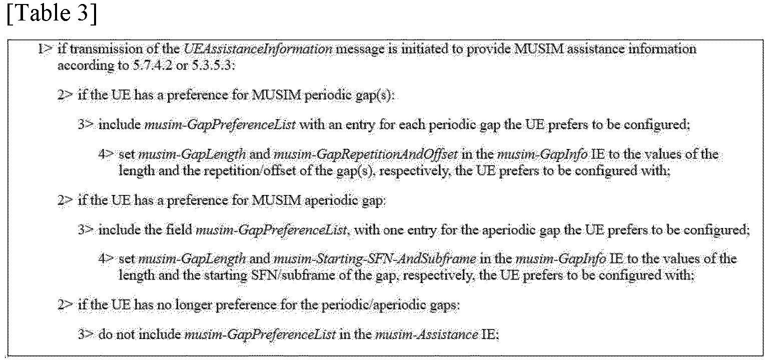

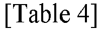

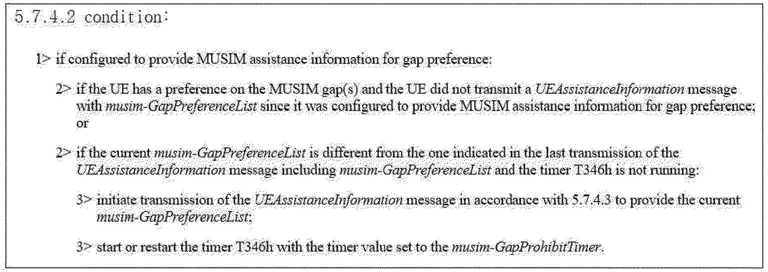

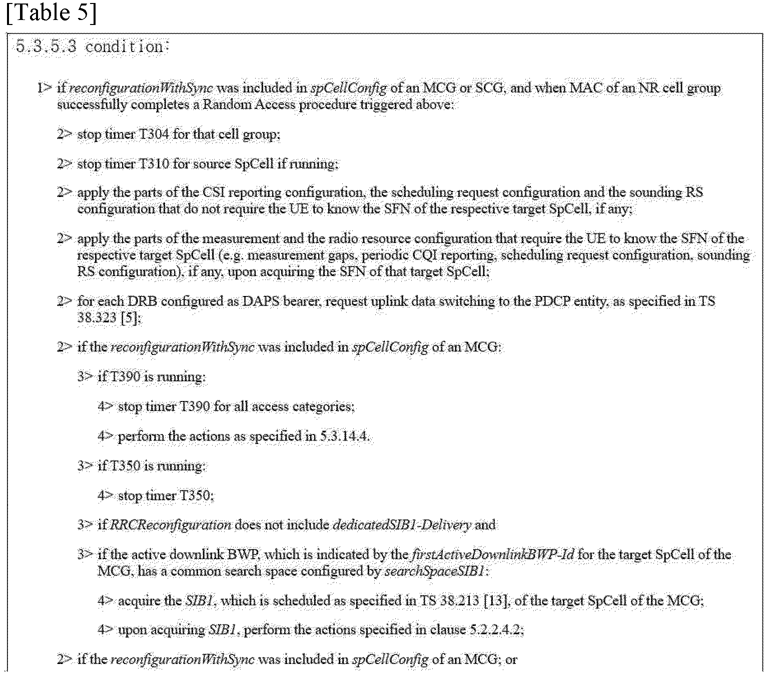

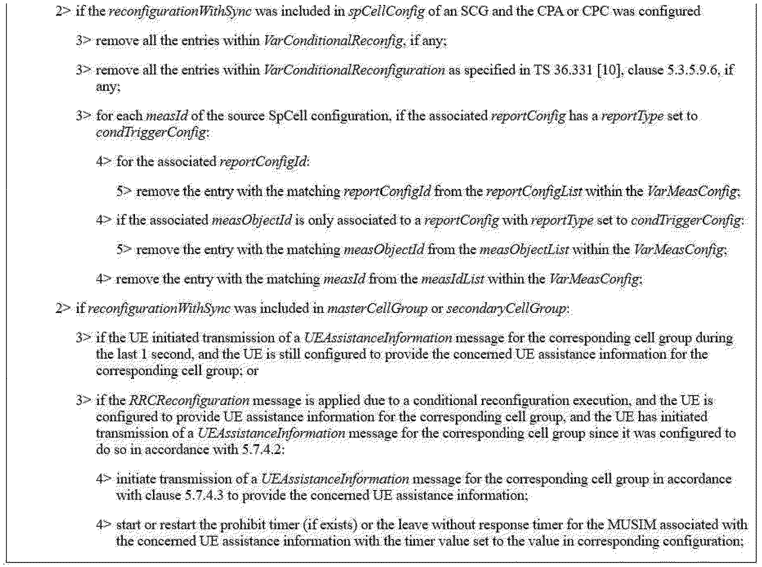

In step 5-40, base station 1 5-04 may transmit, in response to step 5-35, a predetermined RRC message (e.g., an RRCReconfiguration, RRCResume, or new RRC message) containing one or multiple pieces of MUSIM gap configuration information (i.e., musim-GapConfig), based on musim-GapPreferenceList requested by the USIM 1 UE 5-02. The musim-GapConfig may include information having the ASN.1 structure of Table 6 below.

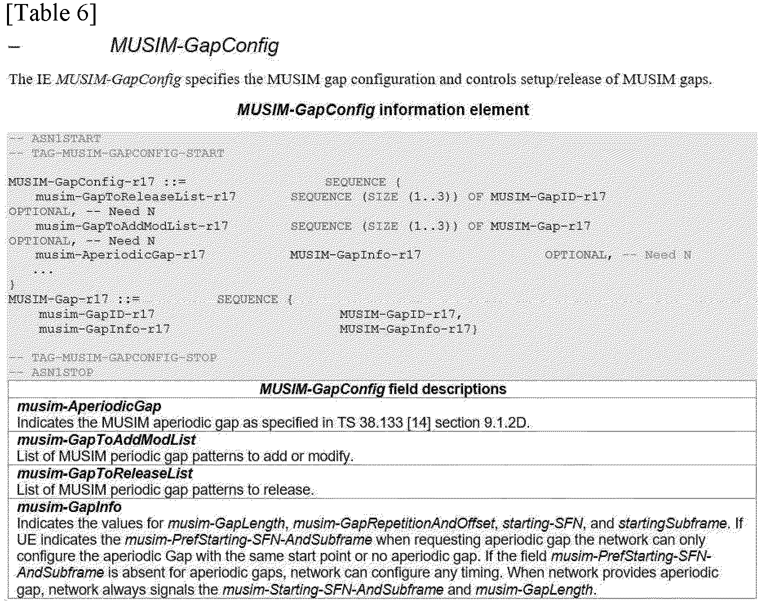

In step 5-45, the USIM 1 UE 5-02 may transmit a predetermined RRC message to base station 1 5-04 in response to the predetermined RRC message received in step 5-40. For example, the predetermined RRC message may refer to an RRCReconfigurationComplete, RRCResumeComplete, or new RRC message, etc.

In step 5-50, at least one of the operations in step 5-25 described above may be performed when each MUSIM gap occurs according to the MUSIM gap configuration received in step 5-40. In this case, the USIM 1 UE 5-02 may maintain the RRC connected mode with respect to base station 1 5-04.

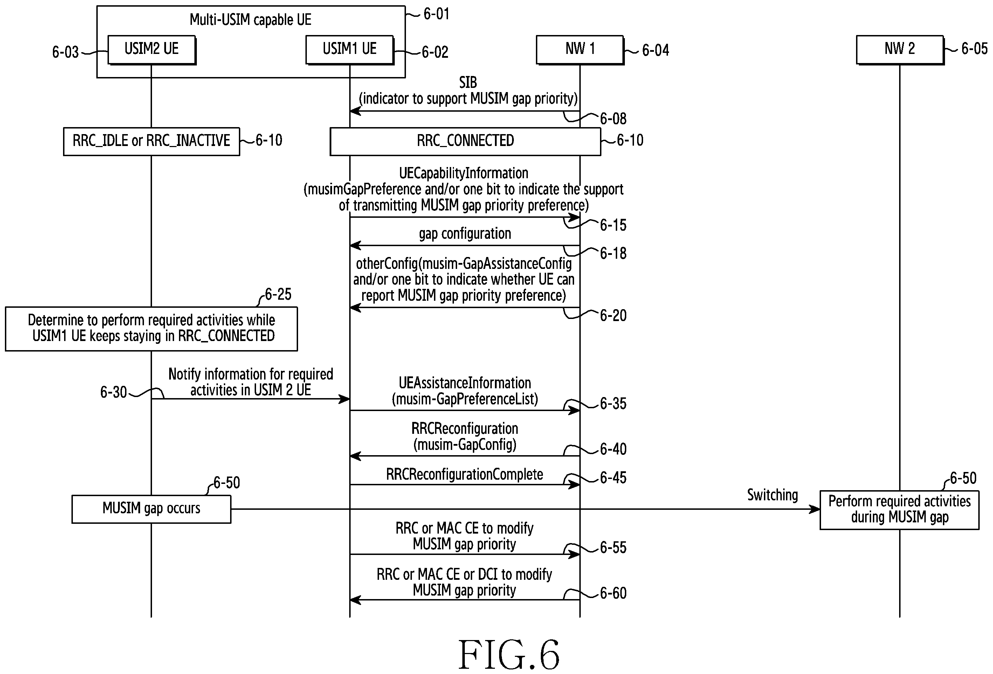

FIG. 6 is a diagram illustrating an operation in which a UE (i.e., MUSIM UE) supporting multiple USIMs performs, while maintaining an RRC connected mode (i.e., RRC_CONNECTED) with a base station associated with one USIM, an operation associated with another USIM, according to an embodiment of the disclosure.

A MUSIM UE 6-01 according to an embodiment of the disclosure may refer to a UE supporting two or more USIMs. In the disclosure, for convenience of description, a dual-USIM UE supporting two USIMs is considered, but it is obvious that the following description of the dual-USIM UE is similarly applicable to a UE supporting three or more USIMs. The dual-USIM UE performs, at a given time, transmission to a base station associated with one USIM or transmission to base stations associated with respective USIMs. Similarly, the dual-USIM UE may perform, at a given time, reception from a base station associated with one USIM or reception from base stations associated with respective USIMs at the same time.

Referring to FIG. 6, the MUSIM UE 6-01 may refer to a UE supporting multiple USIMs in one device. For example, the MUSIM UE may refer to a USIM 1 UE 6-02 when operating in USIM 1, and may refer to a USIM 2 UE 6-03 when operating in USIM 2. Base stations associated with the respective USIMs may not recognize the MUSIM UE as a single UE, but recognize the MUSIM UE as one UE specific to each of the USIMs. For example, base station 1 (or a base station of network 1 (NW1)) 6-04 may recognize the USIM 1 UE 6-02 as one UE, and base station 2 (or a base station of network 2 (NW2)) 6-05 may recognize the USIM 2 6-03 as one UE. Hereinafter, for convenience of description in the embodiments of the disclosure, when the MUSIM UE performs communication using USIM 1, the MUSIM UE is referred to as the USIM 1 UE, and when the MUSIM UE performs communication using USIM 2, the MUSIM UE is referred to as the USIM 2 UE. That is, the MUSIM UE may be either the USIM 1 UE or the USIM 2 UE depending on which USIM among USIM 1 and USIM 2 is used.

In step 6-08, base station 1 6-04 may broadcast system information. The system information may include an indicator indicating that base station 1 6-04 may configure or change a MUSIM gap priority. Alternatively, the system information may include an indicator indicating that base station 1 6-04 may understand a preferred gap priority for each MUSIM gap transmitted by the USIM 1 UE 6-02.

In step 6-10, an RRC connection with base station 1 6-04 is established for the USIM 1 UE 6-02, so that the USIM 1 UE 6-02 may be in an RRC connected mode (RRC_CONNECTED). On the other hand, in step 6-10, an RRC connection with base station 2 6-05 is not established for the USIM 2 UE 6-03, so that the USIM 2 UE 6-03 may be in an RRC idle mode (RRC_IDLE) or an RRC inactive mode (RRC_INACTIVE).

In step 6-15, the USIM 1 UE 6-02 may transmit a UE capability information message (UECapabilityInformation) to base station 1 6-04. The UE capability information message may include the following information.
- Indicator (musimGapPrefenrece) indicating that the USIM 1 UE 6-02 may transmit, as MUSIM assistance information, a MUSIM gap preference and a related MUSIM gap configuration to base station 1 6-04.
- Indicator indicating that the USIM 1 UE 6-02 may transmit a preferred gap priority for each MUSIM gap preference when transmitting, as the MUSIM assistance information, the MUSIM gap preference and the related MUSIM gap configuration to base station 1 6-04.

In step 6-18, base station 1 6-04 may transmit a predetermined RRC message (e.g., RRCResume or RRCReconfiguration) containing one or multiple pieces of gap configuration information to the USIM 1 UE 6-02. The gap configuration information may refer to gap configuration information which may be configured for the UE, such as measurement gap configuration information, positioning gap configuration information, and gap configuration information used by a UE supporting a satellite service (non-terrestrial network gap configuration). Of course, the gap configuration information may not be limited to that mentioned in the disclosure. For example, the gap configuration information may have an ASN.1 structure as shown in Table 7 and Table 8 below.

Table 7 is an example of an ASN.1 structure for measurement gap configuration information or positioning gap configuration information.

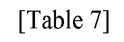

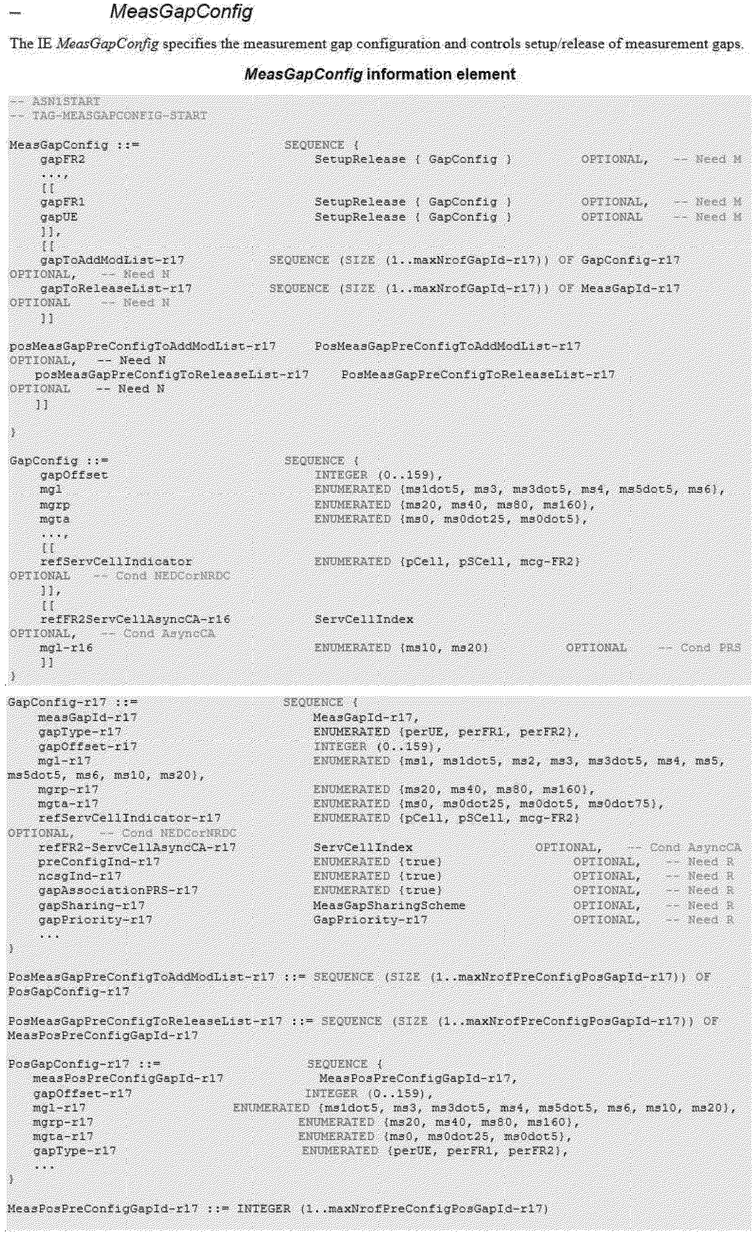

Table 8 is an example of an ASN.1 structure for gap configuration information used by a UE supporting a satellite service.

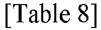

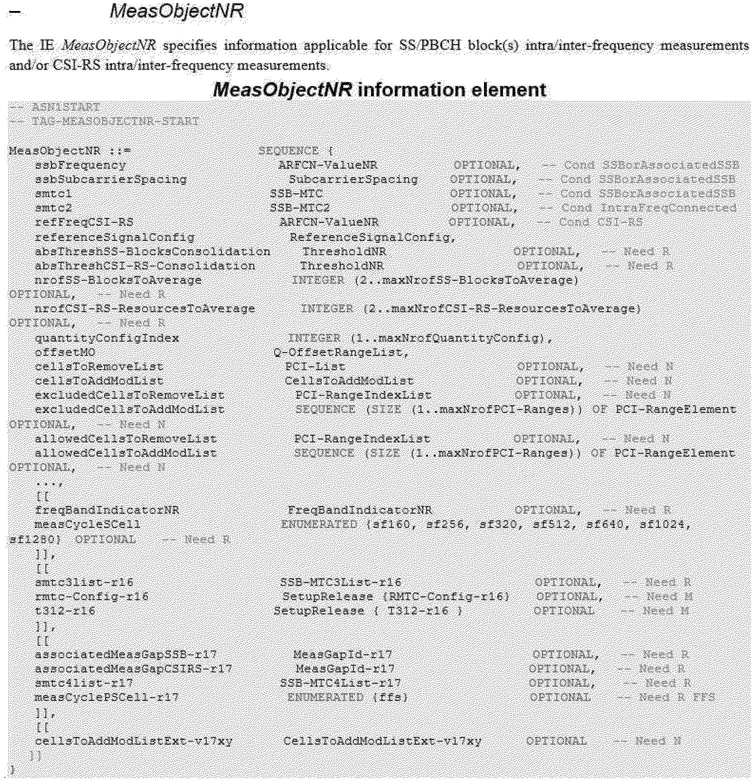

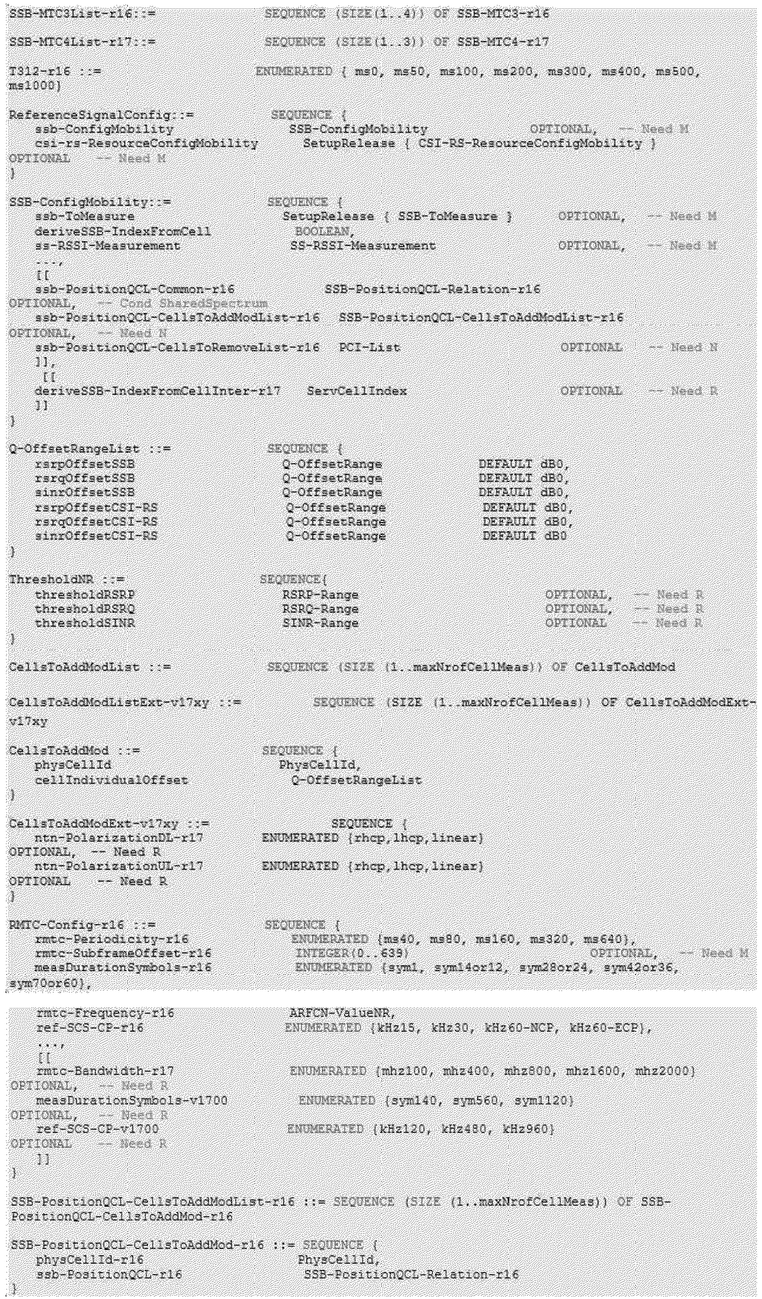

In step 6-20, base station 1 6-04 may transmit a predetermined RRC message (e.g., an RRCReconfiguration message, an RRCResume message, or a new RRC message) including configuration information (i.e., musim-GapAssistanceConfig) indicating to report MUSIM gap information that the USIM 1 UE 6-02 prefers/requires for MUSIM operation. Additionally, the musim-GapAssistanceConfig may be contained in otherConfig. The musim-GapAssistanceConfig may include at least one piece of the following information.
* Musim-GapProhibitTimer value
   ** If base station 1 6-04 configures or sets up a new prohibit timer (e.g., Musim-GapProhibitTimer) value for the USIM 1 UE 6-02, when initiating a procedure for transmitting preferred MUSIM gap configuration information to base station 1 6-04, the USIM 1 UE 6-02 may operate a new timer with the new prohibit timer value and transmit a predetermined RRC message including the preferred MUSIM gap configuration information to base station 1 6-04. When the new timer is running, the USIM 1 UE 6-02 may not be able to transmit, to base station 1 6-04, the predetermined RRC message including the MUSIM gap configuration information preferred by the USIM 1 UE 6-02. That is, if the new timer is not running or expires, the USIM 1 UE 6-02 may transmit, to base station 1 6-04, the predetermined RRC message including the MUSIM gap configuration information preferred by the USIM 1 UE 6-02.
* Indicator indicating to report a gap priority preferred by the UE
   ** It is possible to configure the indicator so that, when the base station cannot understand the gap priority preferred by the UE, the UE does not report the gap priority.
   ** The indicator may not be necessary depending on whether a new indicator is included in the system information block (SIB) in step 6-08. For example, if the indicator described above is included in the SIB and broadcast in step 6-05, the UE may report the preferred gap priority for MUSIM gap to the base station even if the indicator is not configured.

In step 6-25, the USIM 2 UE 6-03 may determine whether to perform a predetermined operation in the RRC idle mode or the RRC inactive mode. The predetermined operation is an operation of the USIM 2 UE 6-03, which is related to base station 2 6-05, and may refer to at least one of the followings.
* Operation 1: The USIM 2 UE 6-03 does not perform an RRC connection establishment procedure or an RRC connection resume procedure with base station 2 6-05, but may perform an operation of receiving a signal transmitted by base station 2 6-05 or an internal operation of the USIM 2 UE via reception. For example:
   ** The USIM 2 UE 6-03 may perform paging channel or short message monitoring associated with base station 2 6-05. For example, the USIM 2 UE 6-03 may monitor a paging occasion in each DRX cycle.
   ** The USIM 2 UE 6-03 may perform monitoring to receive a system information change notification associated with base station 2 6-05. For example, the USIM 2 UE 6-03 may monitor a paging occasion in each DRX cycle.
   ** The USIM 2 UE 6-03 may perform a cell selection or cell reselection evaluation procedure. For example, the USIM 2 UE may perform serving cell or neighboring cell measurement as a part of the cell selection or cell reselection evaluation procedure.
   ** The USIM 2 UE 6-03 may perform a public land mobile network (PLMN) selection procedure.
* Operation 2: The USIM 2 UE 6-03 does not perform an RRC connection establishment procedure or an RRC connection resume procedure with base station 2 6-05, but may perform transmission and reception to or from base station 2 6-05. For example:
   ** The USIM 2 UE 6-03 may request on-demand system information for acquiring system information from base station 2 6-05 or in an on-demand scheme.
* Operation 3: The USIM 2 UE 6-03 in the RRC inactive mode may perform an RRC connection resume procedure with base station 2 6-05, but may not transition to the RRC connected mode. For example:
   ** Although the USIM 2 UE 6-03 receives a RAN paging message transmitted by base station 2 6-05, and the received RAN paging message includes a UE identifier (I-RNTI) indicating the USIM 2 UE 6-03, the USIM 1 UE 6-02 may need to continuously transmit data to and receive data from base station 1 6-04. In this case, the USIM 2 UE 6-03 may transmit, to base station 2 6-05, an RRCResumeRequest/1 message containing a busy indication indicating incapability to respond to the RAN paging message received from base station 2 6-05. It is noted that the busy indication may be contained in resumeCause of the RRCResumeRequest/1 message. In response, base station 2 6-05 may transmit an RRCReject or RRCRelease message to the USIM 2 UE 6-03.
* Operation 4: The USIM 2 UE 6-03 may perform an RRC connection establishment or resume procedure with base station 2 6-05 so as to transition to the RRC connected mode. For example:
   ** The USIM 2 UE 6-03 may perform a registration update procedure or a RAN notification area update procedure.

The aforementioned operations may be periodic operations, aperiodic operations, or one-time operations.

In step 6-30, the USIM 2 UE 6-03 in the RRC idle mode or the RRC inactive mode may notify the USIM 1 UE 6-02 of information required to perform the operations described in step 6-25. It is noted that whether to perform step 6-30 and a specific scheme of performing step 6-30 may vary according to an implementation example of the MUSIM UE 6-01.

In step 6-35, the USIM 1 UE 6-02 may transmit, to base station 1 6-04, a predetermined RRC message (e.g., a UEAssistanceInformation message or a new RRC message) containing configuration information (i.e., musim-GapPreferenceList) for one or multiple preferred MUSIM gap patterns. The musim-GapPreferenceList may include information having the ASN.1 structure of Table 9 and Table 10 below.

Additionally, the UE may contain preferred gap priority for each MUSIM gap pattern. The gap priority may be expressed using an integer value, may be expressed as a high, medium, or low gap priority, and may refer to an indicator indicating that a MUSIM gap is desired for use or is applied (e.g., an indicator indicating that a MUSIM gap is desired for use or is applied when multiple gaps overlap in the time axis or multiple gaps having the same gap priority overlap in the time axis).

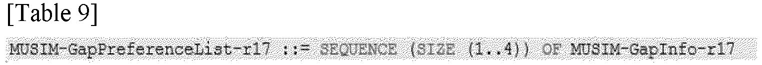

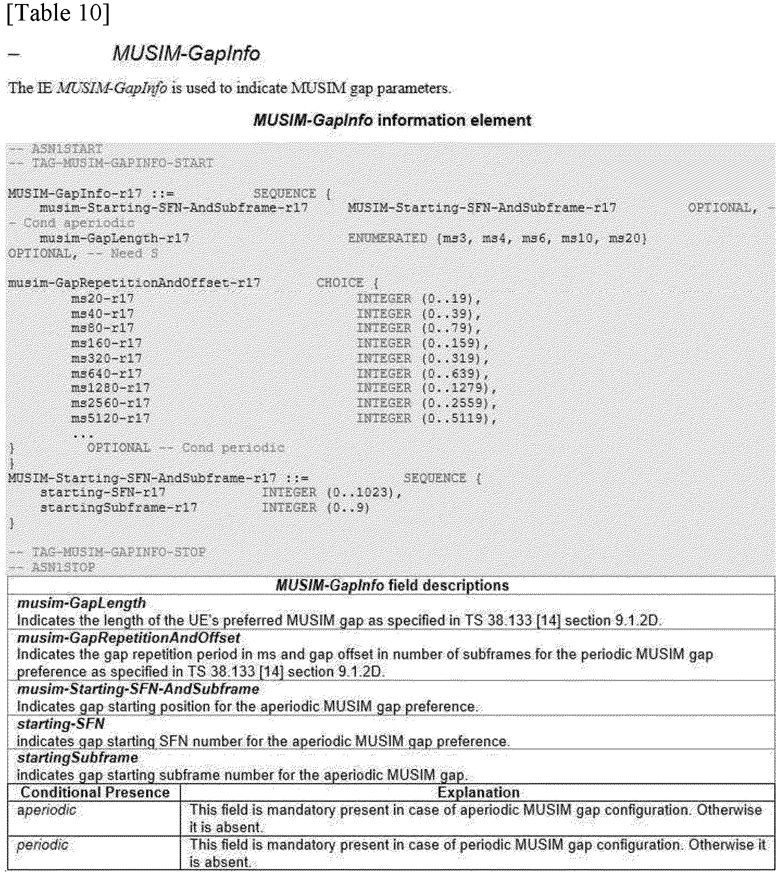

In step 6-35, the USIM 1 UE 6-02 may transmit, to base station 1 6-04, the predetermined RRC message containing musim-GapPreferenceList according to Table 11, Table 12, and Table 13 below.

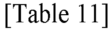

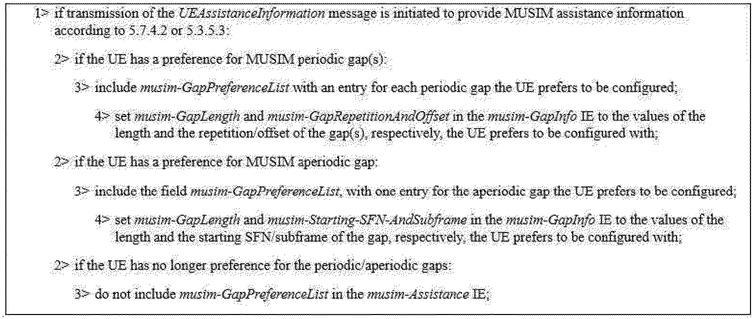

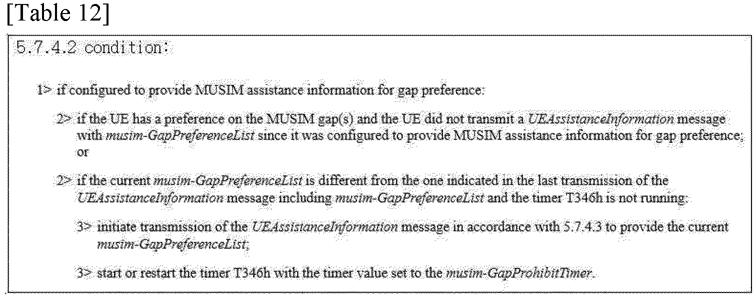

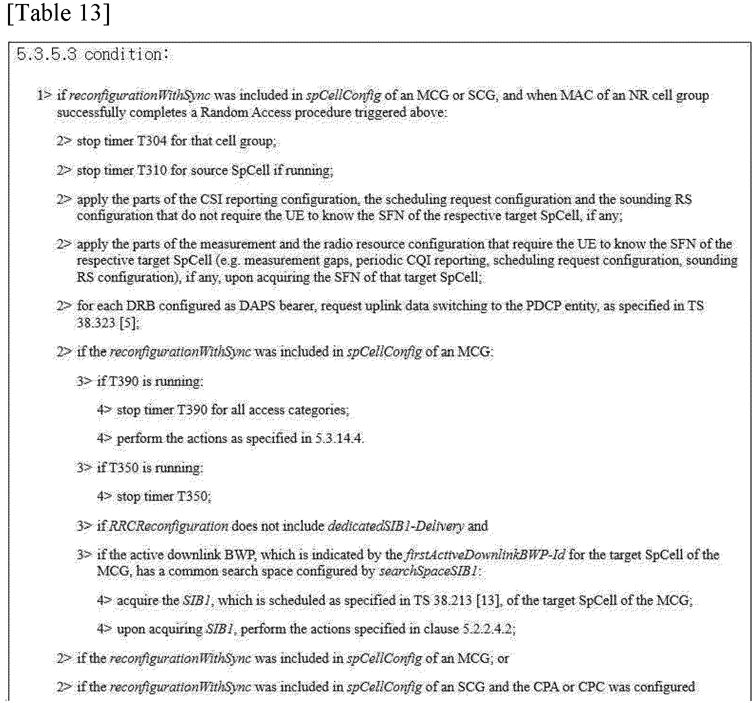

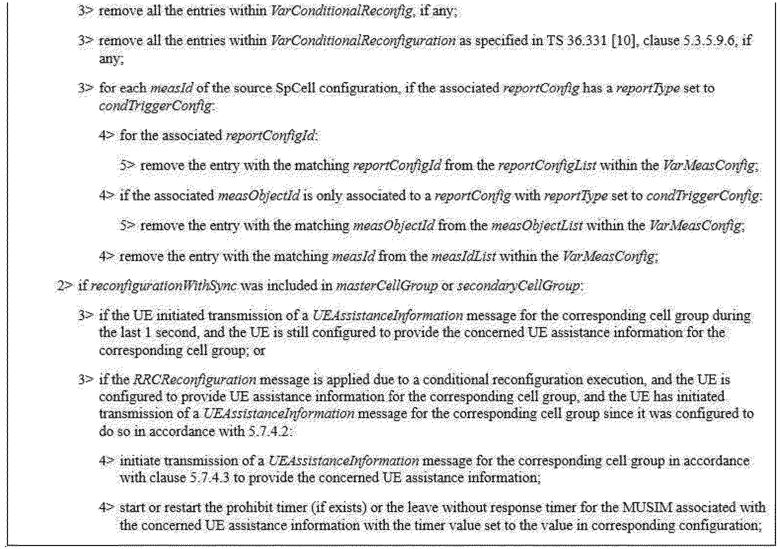

In step 6-40, base station 1 6-04 may transmit, in response to step 6-35, a predetermined RRC message (e.g., an RRCReconfiguration, RRCResume, or new RRC message) containing one or multiple pieces of MUSIM gap configuration information (i.e., musim-GapConfig), based on musim-GapPreferenceList requested by the USIM 1 UE 6-02. The musim-GapConfig may include information having the ASN.1 structure of Table 14 below. In this case, base station 1 6-04 may change a gap priority value for each MUSIM gap or for each gap configuration configured in step 6-18, according to the preferred gap priority for each MUSIM gap pattern received from the USIM 1 UE 6-02 in step 6-35. Alternatively, base station 1 6-04 may include an indicator indicating to use a MUSIM gap.

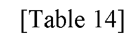

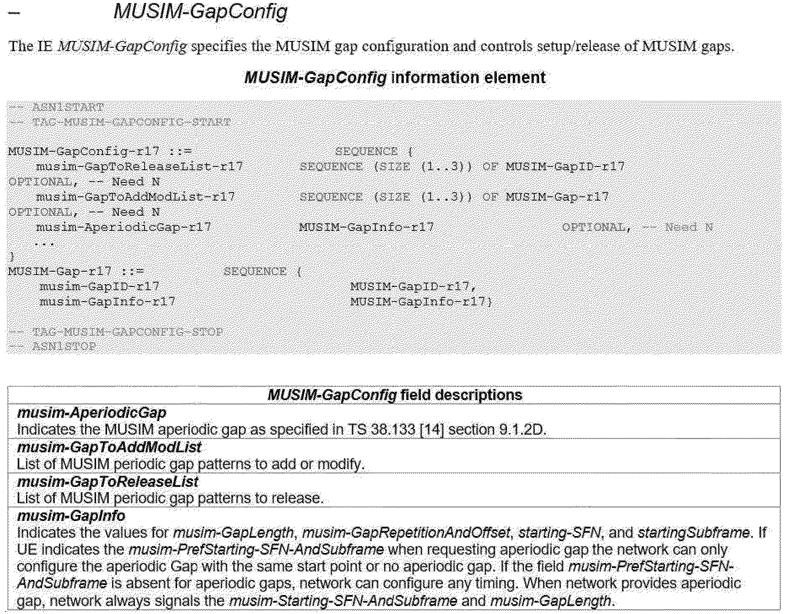

In step 6-45, the USIM 1 UE 6-02 may transmit a predetermined RRC message to base station 1 6-04 in response to the predetermined RRC message received in step 6-40. For example, the predetermined RRC message may refer to an RRCReconfigurationComplete, RRCResumeComplete, or new RRC message, etc.

In step 6-50, at least one of the operations in step 6-25 described above may be performed when each MUSIM gap occurs according to the MUSIM gap configuration received in step 6-40. In this case, the USIM 1 UE 6-02 may maintain the RRC connected mode with respect to base station 1 6-04.

In step 6-55, the USIM 1 UE 6-02 may transmit a predetermined RRC message (e.g., UEAssistanceInformation) or a MAC control element (CE) to base station 1 6-04 in order to change the MUSIM gap priority associated with MUSIM gap.

In step 6-60, base station 1 6-04 may transmit a predetermined RRC message (e.g., RRCReconfiguration), a MAC CE, or downlink control information (DCI) to the USIM 1 UE 6-02 in order to change the MUSIM gap priority associated with MUSIM gap.

In the disclosure, a MUSIM UE transmits a MUSIM gap priority for each MUSIM gap to a base station. However, for the gap priority-related contents described above, even if a UE is not a MUSIM UE, the same procedure may be applied to a general gap configuration as well as a MUSIM gap.

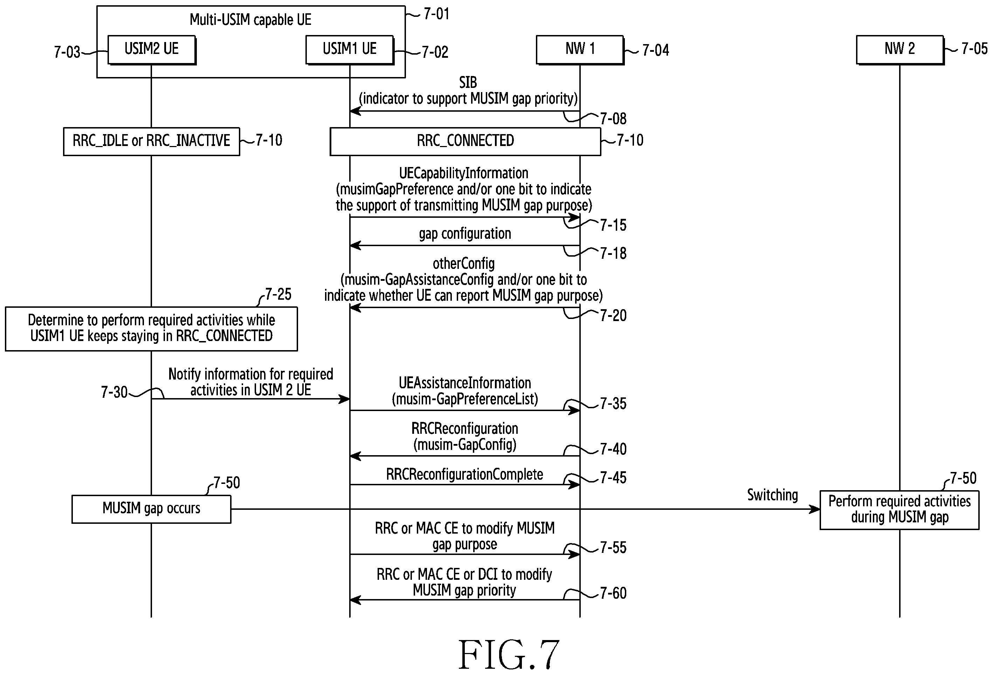

FIG. 7 is a diagram illustrating an operation in which a UE (MUSIM UE) supporting multiple USIMs performs, while maintaining an RRC connected mode (RRC_CONNECTED) with a base station associated with one USIM, an operation associated with another USIM, according to an embodiment of the disclosure.

A MUSIM UE 7-01 according to an embodiment of the disclosure may refer to a UE supporting two or more USIMs. In the disclosure, for convenience of description, a dual-USIM UE supporting two USIMs is considered, but it is obvious that the following description of the dual-USIM UE is similarly applicable to a UE supporting three or more USIMs. The dual-USIM UE performs, at a given time, transmission to a base station associated with one USIM or transmission to base stations associated with respective USIMs. Similarly, the dual-USIM UE may perform, at a given time, reception from a base station associated with one USIM or reception from base stations associated with respective USIMs at the same time.

Referring to FIG. 7, the MUSIM UE 7-01 may refer to a UE supporting multiple USIMs in one device. For example, the MUSIM UE may refer to a USIM 1 UE 7-02 when operating in USIM 1, and may refer to a USIM 2 UE 7-03 when operating in USIM 2. Base stations associated with the respective USIMs may not recognize the MUSIM UE as a single UE, but recognize the MUSIM UE as one UE specific to each of the USIMs. For example, base station 1 (or a base station of network 1 (NW1)) 7-04 may recognize the USIM 1 UE 7-02 as one UE, and base station 2 (or a base station of network 2 (NW2)) 7-05 may recognize the USIM 2 7-03 as one UE. Hereinafter, for convenience of description in the embodiments of the disclosure, when the MUSIM UE performs communication using USIM 1, the MUSIM UE is referred to as the USIM 1 UE, and when the MUSIM UE performs communication using USIM 2, the MUSIM UE is referred to as the USIM 2 UE. That is, the MUSIM UE may be either the USIM 1 UE or the USIM 2 UE depending on which USIM among USIM 1 and USIM 2 is used.

In step 7-08, base station 1 7-04 may broadcast system information. The system information may include an indicator indicating that base station 1 7-04 may configure or change a MUSIM gap priority. Alternatively, the system information may include an indicator indicating that base station 1 7-04 may understand a gap purpose for each MUSIM gap, which is preferred by the USIM 1 UE 7-02.

In step 7-10, an RRC connection with base station 1 7-04 is established for the USIM 1 UE 7-02, so that the USIM 1 UE 7-02 may be in an RRC connected mode (RRC_CONNECTED). On the other hand, in step 7-10, an RRC connection with base station 2 7-05 is not established for the USIM 2 UE 7-03, so that the USIM 2 UE 7-03 may be in an RRC idle mode (RRC_IDLE) or an RRC inactive mode (RRC_INACTIVE).

In step 7-15, the USIM 1 UE 7-02 may transmit a UE capability information message (UECapabilityInformation) to base station 1 7-04. The UE capability information message may include the following information.
- Indicator (musimGapPrefenrece) indicating that the USIM 1 UE 7-02 may transmit, as MUSIM assistance information, a MUSIM gap preference and a related MUSIM gap configuration to base station 1 7-04.
- Indicator indicating that the USIM 1 UE 7-02 may transmit a preferred gap purpose for each MUSIM gap preference when transmitting, as the MUSIM assistance information, the MUSIM gap preference and the related MUSIM gap configuration to base station 1 7-04.

In step 7-18, base station 1 7-04 may transmit a predetermined RRC message (e.g., RRCResume or RRCReconfiguration) containing one or multiple pieces of gap configuration information to the USIM 1 UE 7-02. The gap configuration information may refer to gap configuration information which may be configured for the UE, such as measurement gap configuration information, positioning gap configuration information, and gap configuration information used by a UE supporting a satellite service (non-terrestrial network (NTN) gap configuration). Of course, the gap configuration information may not be limited only to that mentioned in the disclosure. For example, the gap configuration information may have an ASN.1 structure as shown in Table 15 and Table 16 below.

Table 15 is an example of an ASN.1 structure for measurement gap configuration information or positioning gap configuration information.

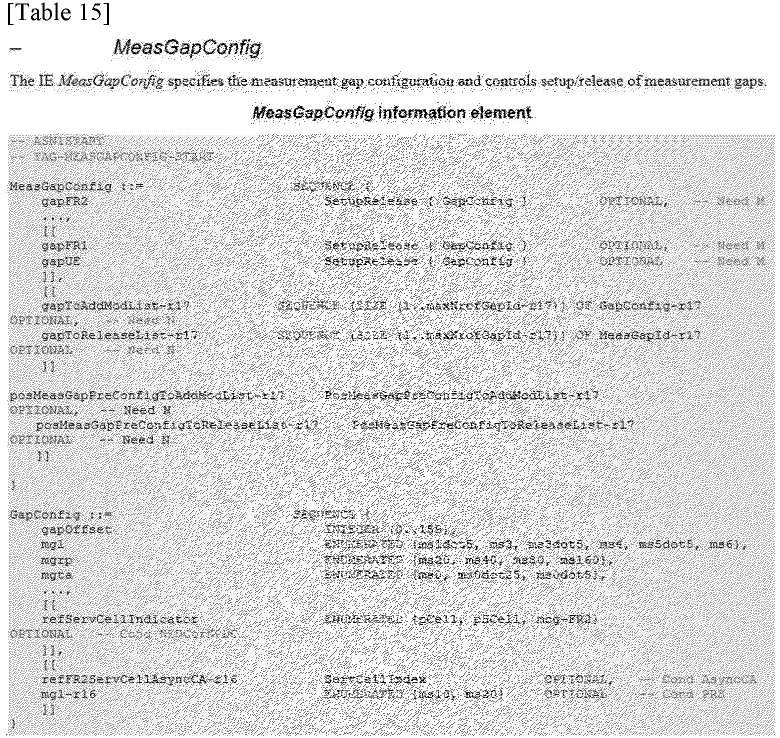

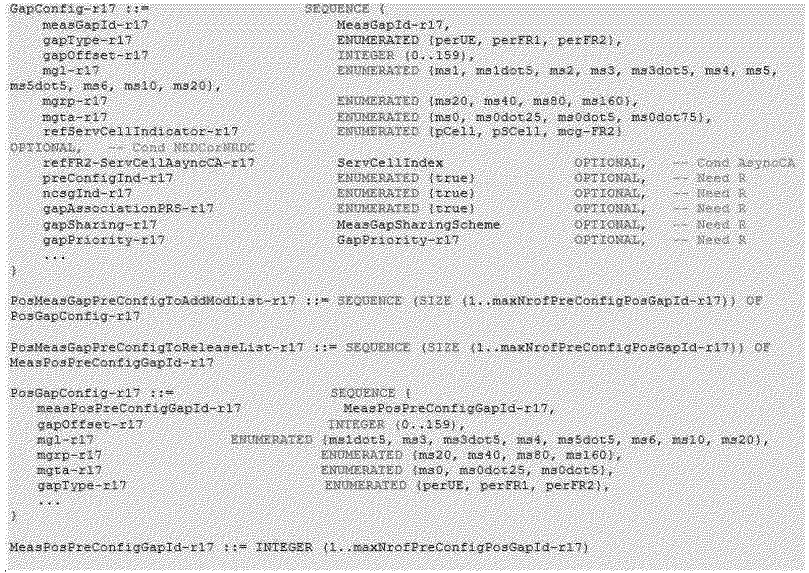

Table 16 is an example of an ASN.1 structure for gap configuration information used by a UE supporting a satellite service.

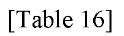

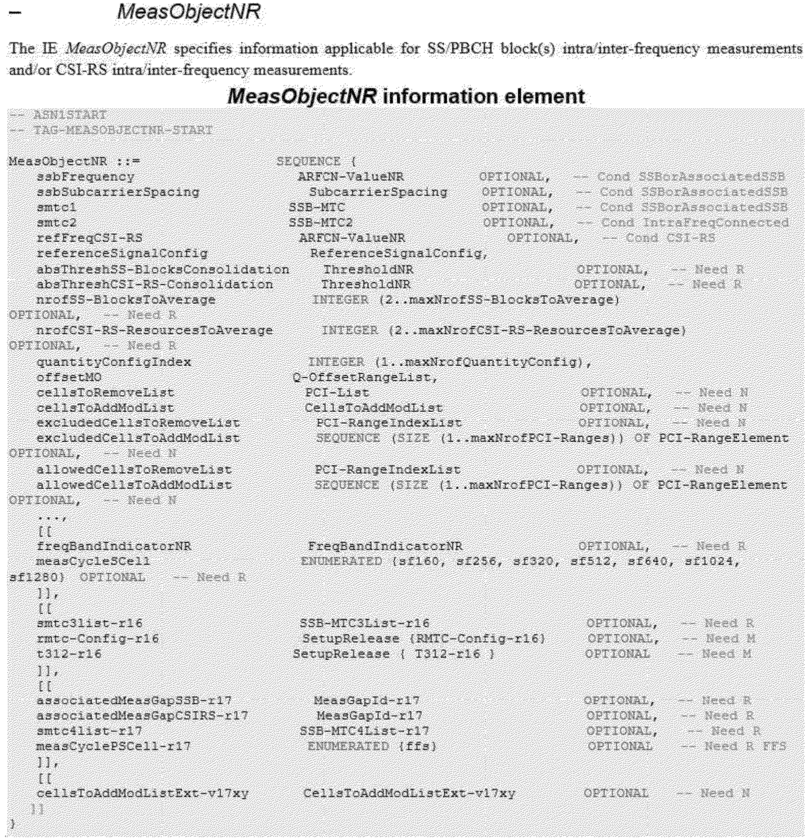

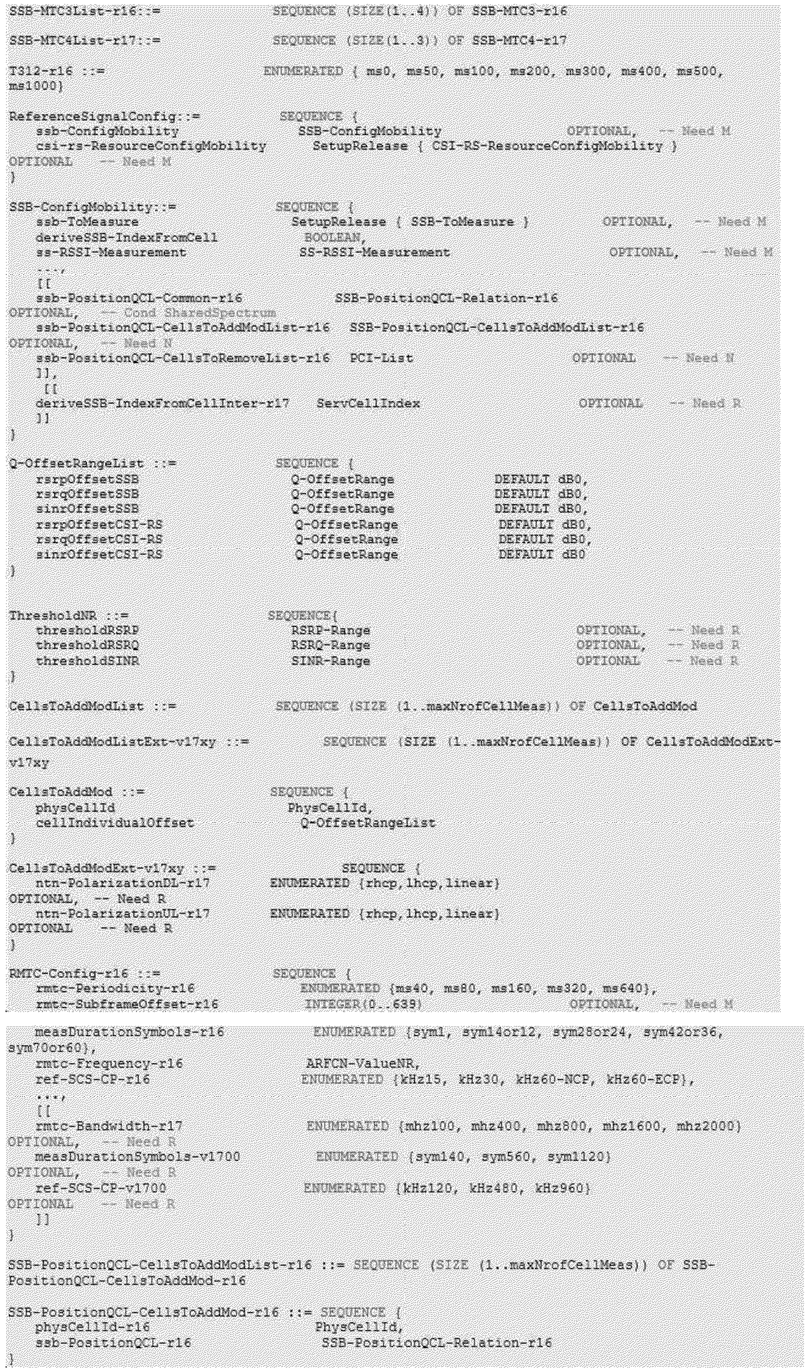

In step 7-20, base station 1 7-04 may transmit a predetermined RRC message (e.g., an RRCReconfiguration message, an RRCResume message, or a new RRC message) including configuration information (i.e., musim-GapAssistanceConfig) indicating to report MUSIM gap information that the USIM 1 UE 7-02 prefers/requires for MUSIM operation. Additionally, the musim-GapAssistanceConfig may be contained in otherConfig. The musim-GapAssistanceConfig may include at least one piece of the following information.
* Musim-GapProhibitTimer value
   ** If base station 1 7-04 configures or sets up a new prohibit timer (e.g., Musim-GapProhibitTimer) value for the USIM 1 UE 7-02, when initiating a procedure for transmitting preferred MUSIM gap configuration information to base station 1 7-04, the USIM 1 UE 7-02 may operate a new timer with the new prohibit timer value and transmit a predetermined RRC message including the preferred MUSIM gap configuration information to base station 1 7-04. When the new timer is running, the USIM 1 UE 7-02 may not be able to transmit, to base station 1 7-04, the predetermined RRC message including the MUSIM gap configuration information preferred by the USIM 1 UE 7-02. That is, if the new timer is not running or expires, the USIM 1 UE 7-02 may transmit, to base station 1 7-04, the predetermined RRC message including the MUSIM gap configuration information preferred by the USIM 1 UE 7-02.
* Indicator indicating to report a gap purpose preferred by the UE
   ** It is possible to configure the indicator so that, when the base station cannot understand the gap purpose preferred by the UE, the UE does not report the gap purpose.
   ** The indicator may not be necessary depending on whether a new indicator is included in the SIB in step 7-08. For example, if the indicator described above is included in the SIB and broadcast in step 7-05, the UE may report the preferred gap purpose for MUSIM gap to the base station even if the indicator is not configured.

In step 7-25, the USIM 2 UE 7-03 may determine whether to perform a predetermined operation in the RRC idle mode or the RRC inactive mode. The predetermined operation is an operation of the USIM 2 UE 7-03, which is related to base station 2 7-05, and may refer to at least one of the followings.
* Operation 1: The USIM 2 UE 7-03 does not perform an RRC connection establishment procedure or an RRC connection resume procedure with base station 2 7-05, but may perform an operation of receiving a signal transmitted by base station 2 7-05 or an internal operation of the USIM 2 UE via reception. For example:
   ** The USIM 2 UE 7-03 may perform paging channel or short message monitoring associated with base station 2 7-05. For example, the USIM 2 UE 7-03 may monitor a paging occasion in each DRX cycle.
   ** The USIM 2 UE 7-03 may perform monitoring to receive a system information change notification associated with base station 2 7-05. For example, the USIM 2 UE 7-03 may monitor a paging occasion in each DRX cycle.
   ** The USIM 2 UE 7-03 may perform a cell selection or cell reselection evaluation procedure. For example, the USIM 2 UE may perform serving cell or neighboring cell measurement as a part of the cell selection or cell reselection evaluation procedure.
   ** The USIM 2 UE 7-03 may perform a public land mobile network (PLMN) selection procedure.
* Operation 2: The USIM 2 UE 7-03 does not perform an RRC connection establishment procedure or an RRC connection resume procedure with base station 2 7-05, but may perform transmission and reception to or from base station 2 7-05. For example:
   ** The USIM 2 UE 7-03 may request on-demand system information for acquiring system information from base station 2 7-05 or in an on-demand scheme.
* Operation 3: The USIM 2 UE 7-03 in the RRC inactive mode may perform an RRC connection resume procedure with base station 2 7-05, but may not transition to the RRC connected mode. For example:
   ** Although the USIM 2 UE 7-03 receives a RAN paging message transmitted by base station 2 7-05, and the received RAN paging message includes a UE identifier (I-RNTI) indicating the USIM 2 UE 7-03, the USIM 1 UE 7-02 may need to continuously transmit data to and receive data from base station 1 7-04. In this case, the USIM 2 UE 7-03 may transmit, to base station 2 7-05, an RRCResumeRequest/1 message containing a busy indication indicating incapability to respond to the RAN paging message received from base station 2 7-05. It is noted that the busy indication may be contained in resumeCause of the RRCResumeRequest/1 message. In response, base station 2 7-05 may transmit an RRCReject or RRCRelease message to the USIM 2 UE 7-03.
* Operation 4: The USIM 2 UE 7-03 may perform an RRC connection establishment or resume procedure with base station 2 7-05 so as to transition to the RRC connected mode. For example:
   ** The USIM 2 UE 7-03 may perform a registration update procedure or a RAN notification area update procedure.

The aforementioned operations may be periodic operations, aperiodic operations, or one-time operations.

In step 7-30, the USIM 2 UE 7-03 in the RRC idle mode or the RRC inactive mode may notify the USIM 1 UE 7-02 of information required to perform the operations described in step 7-25. It is noted that step 7-30 may be implemented by the MUSIM UE 7-01.

In step 7-35, the USIM 1 UE 7-02 may transmit, to base station 1 7-04, a predetermined RRC message (e.g., a UEAssistanceInformation message or a new RRC message) containing configuration information (musim-GapPreferenceList) for one or multiple preferred MUSIM gap patterns. The musim-GapPreferenceList may include information having the ASN.1 structure of Table 17 and Table 18 below. Additionally, the UE may contain a preferred gap purpose for each MUSIM gap pattern. The gap purpose may represent, for example, paging, SI reception, etc.

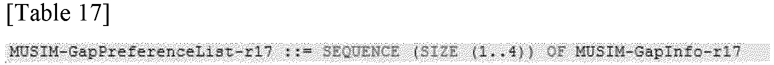

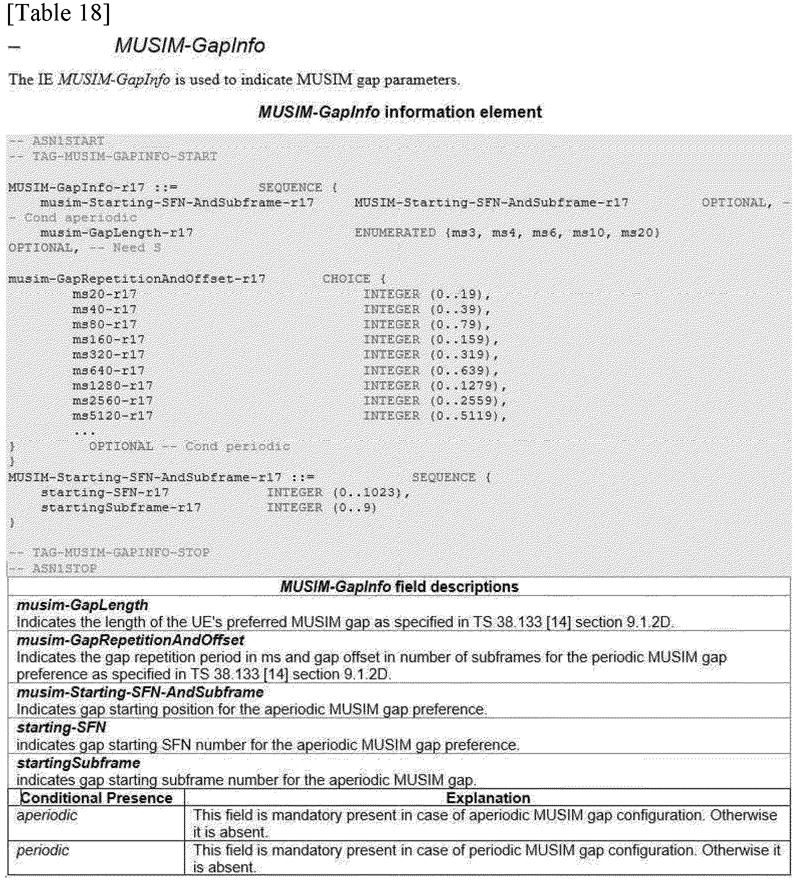

In step 7-35, the USIM 1 UE 7-02 may transmit, to base station 1 7-04, the predetermined RRC message containing musim-GapPreferenceList according to Table 19, Table 20, and Table 7 below.

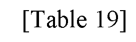

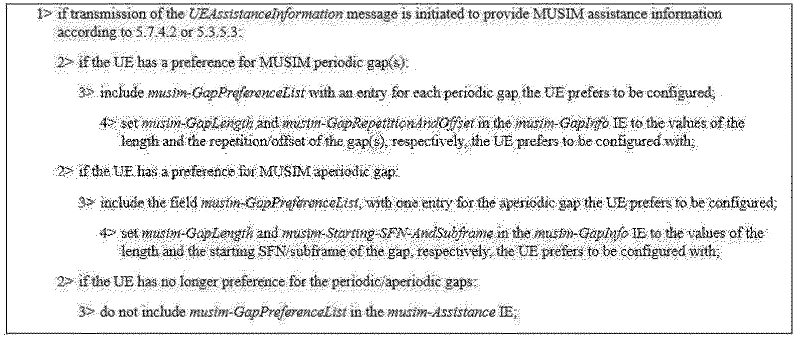

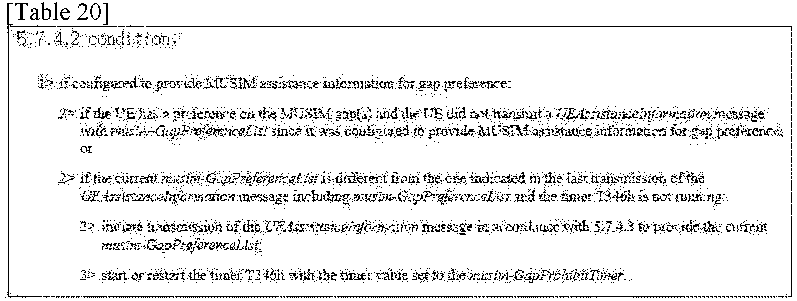

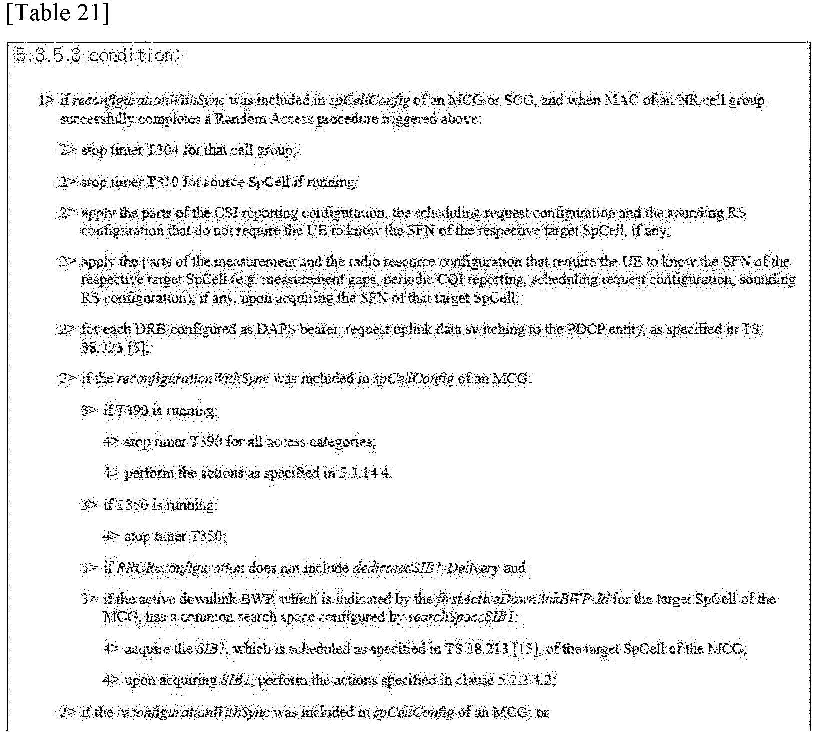

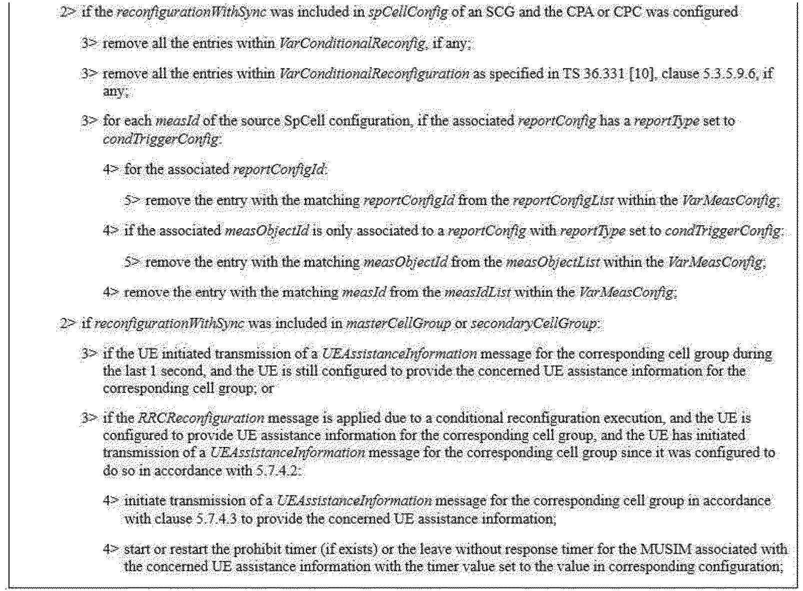

In step 7-40, base station 1 7-04 may transmit, in response to step 7-35, a predetermined RRC message (e.g., an RRCReconfiguration, RRCResume, or new RRC message) containing one or multiple pieces of MUSIM gap configuration information (i.e., musim-GapConfig), based on musim-GapPreferenceList requested by the USIM 1 UE 7-02. The musim-GapConfig may include information having the ASN.1 structure of Table 22 below. In this case, base station 1 7-04 may change a gap priority value for each MUSIM gap or for each gap configuration configured in step 7-18, according to the preferred gap purpose for each MUSIM gap pattern received from the USIM 1 UE 7-02 in step 7-35.

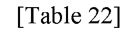

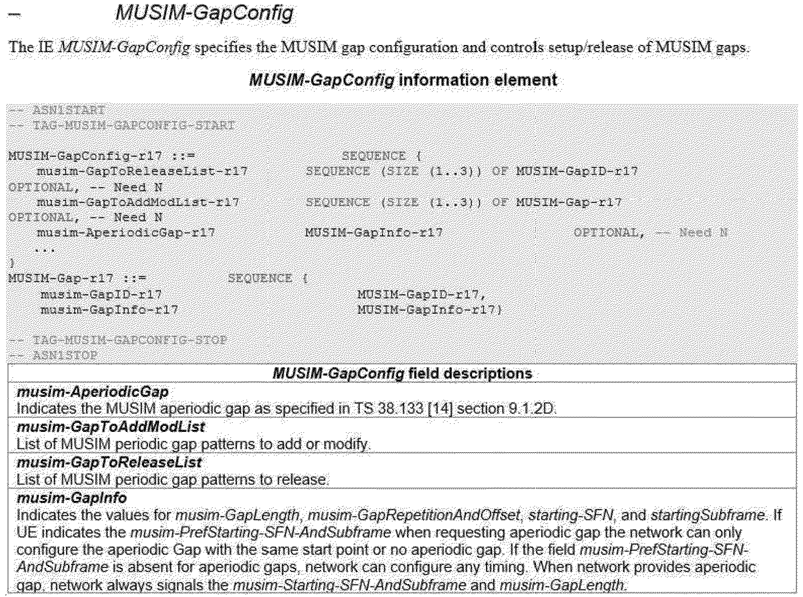

In step 7-45, the USIM 1 UE 7-02 may transmit a predetermined RRC message to base station 1 7-04 in response to the predetermined RRC message received in step 7-40. For example, the predetermined RRC message may refer to an RRCReconfigurationComplete, RRCResumeComplete, or new RRC message, etc.

In step 7-50, at least one of the operations in step 7-25 described above may be performed when each MUSIM gap occurs according to the MUSIM gap configuration received in step 7-40. In this case, the USIM 1 UE 7-02 may maintain the RRC connected mode with respect to base station 1 7-04.

In step 7-55, the USIM 1 UE 7-02 may transmit a predetermined RRC message (e.g., UEAssistanceInformation) or a MAC CE to base station 1 7-04 in order to change the MUSIM gap purpose when necessary.

In step 7-60, base station 1 7-04 may transmit a predetermined RRC message (e.g., RRCReconfiguration), a MAC CE, or DCI to the USIM 1 UE 7-02 in order to change the MUSIM gap priority.

In the disclosure, a MUSIM UE transmits a MUSIM gap purpose for each MUSIM gap to a base station. However, for the gap purpose-related contents described above, even if a UE is not a MUSIM UE, the same procedure may be applied to a general gap configuration as well as a MUSIM gap. Additionally, FIG. 6 and FIG. 7 may be supported simultaneously. For example, a MUSIM UE may transmit a MUSIM gap purpose for each MUSIM gap and a MUSIM gap priority for each MUSIM gap to a base station. Additionally, the MUSIM gap configurations described above may be transmitted by a source base station to a target base station when HO is performed. For example, MUSIM gap configuration information may be contained in a HandoverPreparationInformation message.

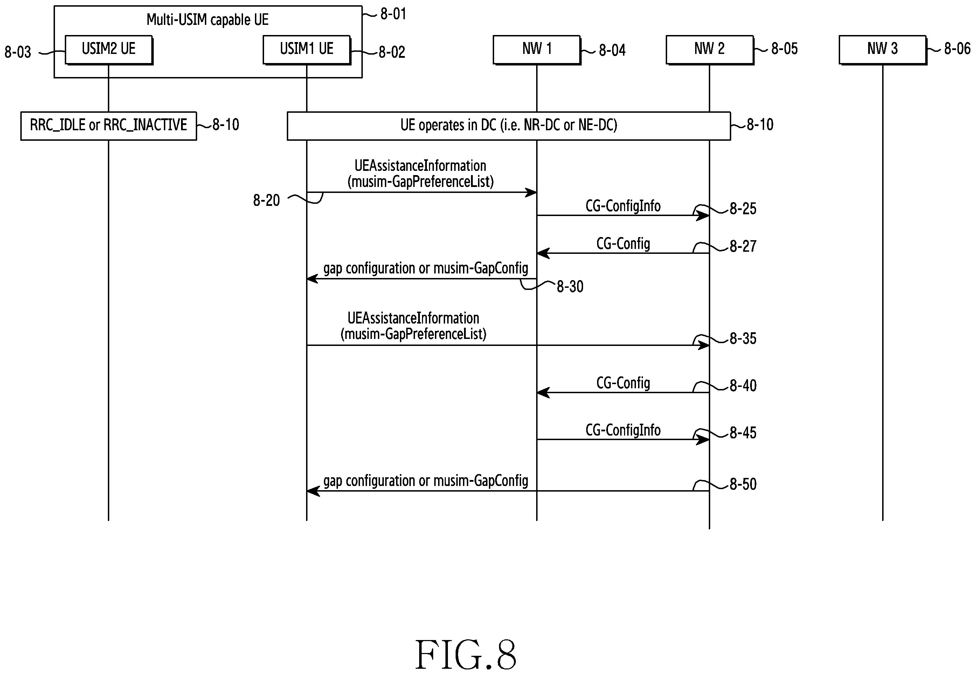

FIG. 8 is a flowchart illustrating inter-base station signaling (inter-node signaling) when a UE (MUSIM UE) supporting multiple USIMs operates in dual connectivity (DC), according to an embodiment of the disclosure.

A MUSIM UE 8-01 according to an embodiment of the disclosure may refer to a UE supporting two or more USIMs. In the disclosure, for convenience of description, a dual-USIM UE supporting two USIMs is considered, but it is obvious that the following description of the dual-USIM UE is similarly applicable to a UE supporting three or more USIMs. The dual-USIM UE performs, at a given time, transmission to a base station associated with one USIM or transmission to base stations associated with respective USIMs. Similarly, the dual-USIM UE may perform, at a given time, reception from a base station associated with one USIM or reception from base stations associated with respective USIMs at the same time.

Referring to FIG. 8, the MUSIM UE 8-01 may refer to a UE supporting multiple USIMs in one device. For example, the MUSIM UE may refer to a USIM 1 UE 8-02 when operating in USIM 1, and may refer to a USIM 2 UE 8-03 when operating in USIM 2. Base stations associated with the respective USIMs may not recognize the MUSIM UE as a single UE, but recognize the MUSIM UE as one UE specific to each of the USIMs. For example, base station 1 (or a base station of network 1 (NW1)) 8-04 and base station 2 (or a base station of network 2 (NW2)) 8-05 may recognize the USIM 1 UE 8-02 as one UE, and base station 3 (or a base station of network 3 (NW3)) 8-06 may recognize the USIM 2 8-03 as one UE. Hereinafter, for convenience of description in the embodiments of the disclosure, when the MUSIM UE performs communication using USIM 1, the MUSIM UE is referred to as the USIM 1 UE, and when the MUSIM UE performs communication using USIM 2, the MUSIM UE is referred to as the USIM 2 UE. That is, the MUSIM UE may be either the USIM 1 UE or the USIM 2 UE depending on which USIM among USIM 1 and USIM 2 is used.

In step 8-10, an RRC connection with base station 1 8-04 is established for the USIM 1 UE 8-02 so that the USIM 1 UE 8-02 may be in an RRC connected mode (i.e., RRC_CONNECTED). In addition, dual connectivity is established for the USIM 1 UE 8-02, so that the USIM 1 UE 8-02 may transmit data to or receive data from base station 1 8-04 and base station 2 8-05. On the other hand, an RRC connection with base station 3 8-06 is not established for the USIM 2 UE 8-03, so that the USIM 2 UE 8-03 may be in an RRC idle mode (i.e., RRC_IDLE) or an RRC inactive mode (i.e., RRC_INACTIVE).

In step 8-20, the USIM 1 UE 8-02 may transmit, to base station 1 8-04, a predetermined RRC message (e.g., a UEAssistanceInformation message or a new RRC message) containing configuration information (i.e., musim-GapPreferenceList) for one or multiple preferred MUSIM gap patterns. This may follow the embodiments described above.

In step 8-25, base station 1 8-04 may transfer, to base station 2 8-05, the musim-GapPreferenceList received from the USIM 1 UE. Alternatively, base station 1 8-04 may transmit only a configuration, which is allowable to base station 1 8-04, in the musim-GapPreferenceList received from the USIM 1 UE.

In step 8-27, base station 2 8-05 may transmit, to base station 1 8-04, a MUSIM gap that base station 2 8-05 is to configure, allowable MUSIM gap configuration information, or unallowable MUSIM gap configuration information in the received musim-GapPreferenceList. Alternatively, base station 2 8-05 may change some configuration information of MUSIM gap configuration information and transmit the same to base station 1 8-04.

In step 8-30, base station 1 8-04 may transmit a predetermined RRC message (e.g., RRCResume or RRCReconfiguration) to the USIM 1 UE 8-02 in order to configure musim-GapConfig or configure gap configuration information. This procedure may follow the embodiments described above.

In step 8-35, the USIM 1 UE 8-02 may transmit, to base station 2 8-04, a predetermined RRC message (e.g., a UEAssistanceInformation message or a new RRC message) containing configuration information (i.e., musim-GapPreferenceList) for one or multiple preferred MUSIM gap patterns. The predetermined RRC message may follow the embodiments described above.

In step 8-40, base station 2 8-05 may transfer, to base station 1 8-04, the musim-GapPreferenceList received from the USIM 1 UE. Alternatively, base station 1 8-04 may transmit only a configuration, which is allowable to base station 2 8-04, in the musim-GapPreferenceList received from the USIM 1 UE.

In step 8-45, base station 1 8-04 may transmit, to base station 2 8-05, MUSIM gap configuration information allowable to base station 1 8-04 or MUSIM gap configuration information unallowable to base station 1 8-04 in the received musim-GapPreferenceList. Alternatively, base station 1 8-04 may change some configuration information of MUSIM gap configuration information and transmit the same to base station 2 8-05.

In step 8-50, base station 2 8-05 may transmit a predetermined RRC message (e.g., RRCResume or RRCReconfiguration) to the USIM 1 UE 8-02 in order to configure musim-GapConfig or configure gap configuration information. This procedure may follow the embodiments described above.

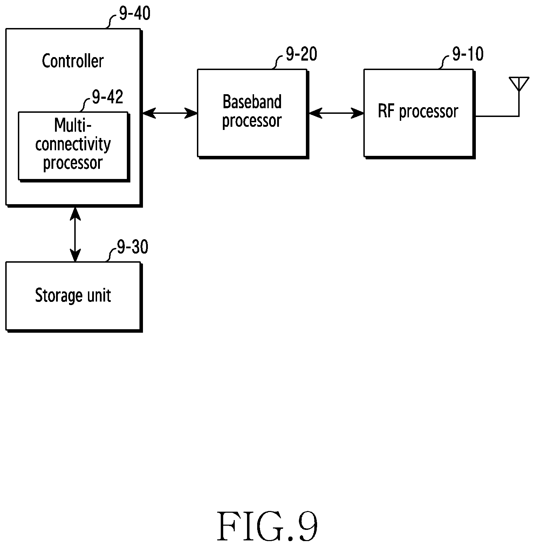

FIG. 9 is a block diagram illustrating an internal structure of a UE according to an embodiment of the disclosure.

Referring to the drawing, the UE includes a radio frequency (RF) processor 9-10, a baseband processor 9-20, a storage unit 9-30, and a controller 9-40.

The RF processor 9-10 performs a function for signal transmission and reception via a wireless channel, such as band switching and amplification of a signal. That is, the RF processor 9-10 up-converts a baseband signal provided from the baseband processor 9-20 into an RF band signal, transmits the converted RF band signal via an antenna, and then down-converts the RF band signal received via the antenna into a baseband signal. For example, the RF processor 9-10 may include a transmission filter, a reception filter, an amplifier, a mixer, an oscillator, a digital-to-analog converter (DAC), an analog-to-digital converter (ADC), and the like. In the drawing, only one antenna is illustrated, but the UE may have multiple antennas. In addition, the RF processor 9-10 may include multiple RF chains. Furthermore, the RF processor 9-10 may perform beamforming. For beamforming, the RF processor 9-10 may adjust phases and magnitudes of respective signals transmitted and received via multiple antennas or antenna elements. In addition, the RF processor may perform MIMO, and may receive multiple layers when performing MIMO operations.

The baseband processor 9-20 performs conversion between a baseband signal and a bitstream according to physical layer specifications of the system. For example, during data transmission, the baseband processor 9-20 generates complex symbols by encoding and modulating a transmission bitstream. In addition, during data reception, the baseband processor 9-20 reconstructs a reception bitstream via demodulation and decoding of a baseband signal provided from the RF processor 9-10. For example, when conforming to an orthogonal frequency division multiplexing (OFDM) scheme, during data transmission, the baseband processor 9-20 generates complex symbols by encoding and modulating a transmission bitstream, maps the complex symbols to sub-carriers, and then configures OFDM symbols by performing an inverse fast Fourier transform (IFFT) operation and cyclic prefix (CP) insertion. In addition, during data reception, the baseband processor 9-20 divides a baseband signal provided from the RF processor 9-10 into OFDM symbol units, reconstructs signals mapped to sub-carriers via a fast Fourier transform (FFT), and then reconstructs a reception bitstream via demodulation and decoding.

The baseband processor 9-20 and the RF processor 9-10 transmit and receive signals as described above. Accordingly, the baseband processor 9-20 and the RF processor 9-10 may be referred to as a transmitter, a receiver, a transceiver, or a communication unit. Furthermore, at least one of the baseband processor 9-20 and the RF processor 9-10 may include multiple communication modules to support multiple different radio access technologies. In addition, at least one of the baseband processor 9-20 and the RF processor 9-10 may include different communication modules to process signals of different frequency bands. For example, the different radio access technologies may include a wireless LAN (e.g., IEEE 802.11), a cellular network (e.g., LTE), and the like. In addition, the different frequency bands may include a super-high frequency (SHF) wave (e.g., 2.NRHz, NRhz) band and a millimeter wave (e.g., 60 GHz) band.

The storage unit 9-30 stores data, such as a basic program, an application program, configuration information, and the like for operation of the UE. Particularly, the storage unit 9-30 may store information related to a second access node that performs wireless communication by using a second radio access technology. In addition, the storage unit 9-30 provides stored data in response to a request of the controller 9-40.

The controller 9-40 controls overall operations of the UE. For example, the controller 9-40 transmits and receives a signal via the baseband processor 9-20 and the RF processor 9-10. In addition, the controller 9-40 records and reads data in the storage unit 9-40. To this end, the controller 9-40 may include at least one processor. For example, the controller 9-40 may include a communication processor (CP) configured to perform control for communication and an application processor (AP) configured to control a higher layer, such as an application program. The controller 9-40 may further include a multi-connectivity processor 9-42 for supporting multi-connectivity.

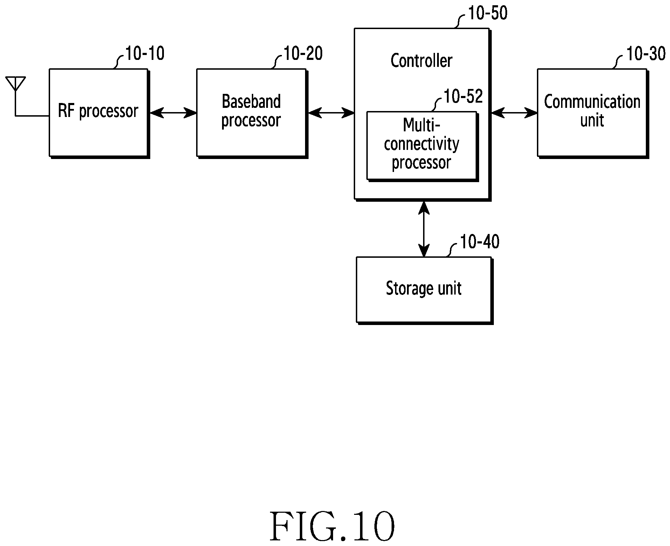

FIG. 10 is a block diagram illustrating a configuration of an NR base station according to an embodiment of the disclosure.

As illustrated in the drawing, the base station includes an RF processor 10-10, a baseband processor 10-20, a backhaul communication unit 10-30, a storage unit 10-40, and a controller 10-50.

The RF processor 10-10 performs a function for signal transmission and reception via a wireless channel, such as band switching and amplification of a signal. That is, the RF processor 10-10 up-converts a baseband signal provided from the baseband processor 10-20 into an RF band signal, transmits the converted RF band signal via an antenna, and then down-converts the RF band signal received via the antenna into a baseband signal. For example, the RF processor 10-10 may include a transmission filter, a reception filter, an amplifier, a mixer, an oscillator, a DAC, an ADC, and the like. In the drawing, only one antenna is illustrated, but a first access node may include multiple antennas. In addition, the RF processor 10-10 may include multiple RF chains. Furthermore, the RF processor 10-10 may perform beamforming. For beamforming, the RF processor 10-10 may adjust phases and magnitudes of respective signals transmitted and received via multiple antennas or antenna elements. The RF processor may perform a downlink MIMO operation by transmitting one or more layers.

The baseband processor 10-20 performs a function of conversion between a baseband signal and a bitstream according to physical layer specifications of a first radio access technology. For example, during data transmission, the baseband processor 10-20 generates complex symbols by encoding and modulating a transmission bitstream. In addition, during data reception, the baseband processor 10-20 reconstructs a reception bitstream via demodulation and decoding of a baseband signal provided from the RF processor 10-10. For example, when conforming to an OFDM scheme, during data transmission, the baseband processor 10-20 generates complex symbols by encoding and modulating a transmission bitstream, maps the complex symbols to sub-carriers, and then configures OFDM symbols via an IFFT operation and CP insertion. In addition, during data reception, the baseband processor 10-20 divides a baseband signal provided from the RF processor 10-10 into OFDM symbol units, reconstructs signals mapped to sub-carriers via a FFT operation, and then reconstructs a reception bitstream via demodulation and decoding. The baseband processor 10-20 and the RF processor 10-10 transmit and receive signals as described above. Accordingly, the baseband processor 10-20 and the RF processor 10-10 may be referred to as a transmitter, a receiver, a transceiver, a communication unit, or a wireless communication unit.

The backhaul communication unit 10-30 provides an interface to perform communication with other nodes within a network. That is, the backhaul communication unit 10-30 converts, into a physical signal, a bitstream transmitted from the main base station to another node, for example, an auxiliary base station and a core network, and converts a physical signal received from the another node into a bitstream.

The storage unit 10-40 stores data, such as a base program, an application program, and configuration information, for operation of the main base station. In particular, the storage unit 10-40 may store information on a bearer assigned to a connected UE, a measurement result reported from the connected UE, and the like. In addition, the storage unit 10-40 may store information serving as a criterion for determining whether to provide or suspend multi-connectivity associated with the UE. In addition, the storage unit 10-40 provides stored data in response to a request of the controller 10-50.

The controller 10-50 controls overall operations of the main base station. For example, the controller 10-50 transmits and receives a signal via the baseband processor 10-20 and the RF processor 10-10 or via the backhaul communication unit 10-30. In addition, the controller 10-50 records and reads data in the storage unit 10-40. To this end, the controller 10-50 may include at least one processor. In addition, the controller 10-50 may further include a multi-connectivity processor 10-52 for supporting multi-connectivity.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

## Claims

1. A method performed by a UE supporting multiple universal subscriber identity modules (MUSIMs) in a wireless communication system, the method comprising:
transmitting, to a base station, a first message comprising a first indicator indicating that the UE may report priority for each MUSIM-related gap preference; and
receiving, from the base station, a second message comprising a second indicator indicating the UE to report the priority.

2. The method of claim 1, further comprising:
transmitting, to the base station, a third message comprising information on at least one gap preference and information on priority of each of the at least one gap preference,
wherein the information on the priority comprises at least one of an integer value, a value indicating a level of the priority, or a value for requesting priority use with respect to each of the at least one gap preference.

3. The method of claim 2, further comprising:
receiving a fourth message comprising MUSIM gap configuration information from the base station,
wherein the MUSIM gap configuration information comprises information on preferred gap priority for each MUSIM gap pattern.

4. The method of claim 3, wherein the first message is a message for reporting a capability of the UE, the second message is a message for transmitting other configuration for the UE, the third message is a message for reporting assistance information of the UE, and the fourth message is a message for RRC configuration of the UE.

5. A method performed by a base station in a wireless communication system, the method comprising:
receiving, from a UE supporting multiple universal subscriber identity modules (MUSIMs), a first message comprising a first indicator indicating that the UE may report priority for each MUSIM-related gap preference; and
transmitting, to the UE, a second message comprising a second indicator indicating the UE to report the priority.

6. The method of claim 5, further comprising:
receiving, from the UE, a third message comprising information on at least one gap preference and information on priority of each of the at least one gap preference; and
transmitting a fourth message comprising MUSIM gap configuration information to the UE,
wherein the information on the priority comprises at least one of an integer value, a value indicating a level of the priority, or a value for requesting priority use with respect to each of the at least one gap preference, and
wherein the MUSIM gap configuration information comprises information on preferred gap priority for each MUSIM gap pattern.

7. The method of claim 6, wherein the first message is a message for reporting a capability of the UE, the second message is a message for transmitting other configuration for the UE, the third message is a message for reporting assistance information of the UE, and the fourth message is a message for RRC configuration of the UE.

8. A UE supporting multiple universal subscriber identity modules (MUSIMs) in a wireless communication system, the UE comprising:
a transceiver; and
a controller coupled with the transceiver and configured to:
transmit, to a base station, a first message comprising a first indicator indicating that the UE may report priority for each MUSIM-related gap preference; and
receive, from the base station, a second message comprising a second indicator indicating the UE to report the priority.

9. The UE of claim 8, wherein the controller is further configured to:
transmit, to the base station, a third message comprising information on at least one gap preference and information on priority of each of the at least one gap preference,
wherein the information on the priority comprises at least one of an integer value, a value indicating a level of the priority, or a value for requesting priority use with respect to each of the at least one gap preference.

10. The UE of claim 9, wherein the controller is further configured to:
receive a fourth message comprising MUSIM gap configuration information from the base station,
wherein the MUSIM gap configuration information comprises information on preferred gap priority for each MUSIM gap pattern.

11. The UE of claim 10, wherein the first message is a message for reporting a capability of the UE, the second message is a message for transmitting other configuration for the UE, the third message is a message for reporting assistance information of the UE, and the fourth message is a message for RRC configuration of the UE.

12. A base station in a wireless communication system, the base station comprising:
a transceiver; and
a controller coupled with the transceiver and configured to:
receive, from a UE supporting multiple universal subscriber identity modules (MUSIMs), a first message comprising a first indicator indicating that the UE may report priority for each MUSIM-related gap preference; and
transmit, to the UE, a second message comprising a second indicator indicating the UE to report the priority.

13. The base station of claim 12, wherein the controller is further configured to:
receive, from the UE, a third message comprising information on at least one gap preference and information on priority of each of the at least one gap preference,
wherein the information on the priority comprises at least one of an integer value, a value indicating a level of the priority, or a value for requesting priority use with respect to each of the at least one gap preference.

14. The base station of claim 13, wherein the controller is further configured to:
transmit a fourth message comprising MUSIM gap configuration information to the UE,
wherein the MUSIM gap configuration information comprises information on preferred gap priority for each MUSIM gap pattern.

15. The base station of claim 14, wherein the first message is a message for reporting a capability of the UE, the second message is a message for transmitting other configuration for the UE, the third message is a message for reporting assistance information of the UE, and the fourth message is a message for RRC configuration of the UE.
